(19) **Europäisches Patentamt European Patent Office Office européen des brevets**

(11) **EP 2 592 062 B1**

(12) **FASCICULE DE BREVET EUROPEEN**

(45) Date de publication et mention de la délivrance du brevet:
**07.04.2021 Bulletin 2021/14**

(51) Int Cl.:
**C07C 1/20** *(2006.01)*    **C10G 45/00** *(2006.01)*

(21) Numéro de dépôt: **12290366.9**

(22) Date de dépôt: **24.10.2012**

(54) **PRODUCTION DE CARBURANTS PARAFFINIQUES À PARTIR DE MATIÈRES RENOUVELABLES PAR UN PROCÉDÉ D'HYDROTRAITEMENT EN CONTINU COMPRENANT UNE ÉTAPE DE PRÉTRAITEMENT SOUS HYDROGENE**

HERSTELLUNG VON PARAFFINHALTIGEN BRENNSTOFFEN AUS ERNEUERBAREN MATERIALIEN MIT HILFE EINES KONTINUIERLICHEN WASSERSTOFFBEHANDLUNGSVERFAHRENS, DAS EINE VORBEHANDLUNGSPHASE UNTER WASSERSTOFF UMFASST

PRODUCTION OF PARAFFIN FUELS USING RENEWABLE MATERIALS BY A CONTINUOUS HYDROGEN-TREATMENT METHOD INCLUDING A STEP OF PRE-TREATMENT WITH HYDROGEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2011 FR 1103412**

(43) Date de publication de la demande:
**15.05.2013 Bulletin 2013/20**

(73) Titulaire: **IFP Energies nouvelles 92500 Rueil-Malmaison (FR)**

(72) Inventeurs:
• **Dupassieux, Nathalie 73470 Ayn (FR)**
• **Chapus, Thierry 69001 Lyon (FR)**

(74) Mandataire: **IFP Energies nouvelles Département Propriété Industrielle Rond Point de l'échangeur de Solaize BP3 69360 Solaize (FR)**

(56) Documents cités:
**US-A1- 2010 133 144    US-B1- 6 346 286 US-B2- 7 232 935**

• **G.R. LIST ET AL.: "STEAM REFINED SOYBEAN OIL:II EFFECT OF DEGUMMING METHODS ON REMOVAL OF PROOXIDANTS AND PHOSPHOLIPIDS", JOURNAL OF THE AMERICAN OIL CHEMISTS SOCIETY, vol. 55, 31 décembre 1978 (1978-12-31), pages 280-284, XP002675354,**

**Description**

L'invention concerne un procédé pour la production d'hydrocarbures paraffiniques utilisables comme carburants par hydrotraitement de charges issues de sources renouvelables telles que les huiles et graisses d'origine végétale ou animale. En particulier, l'invention concerne un procédé pour la production d'hydrocarbures paraffiniques par hydrotraitement de charges issues de sources renouvelables, dans lequel une étape de prétraitement poussée, permettant l'élimination des impuretés inorganiques contenues dans lesdites charges, est intégrée en amont des zones catalytiques en lit fixes d'hydrotraitement.

Le contexte international actuel est marqué d'abord par la croissance rapide du besoin en carburants, en particulier de bases gazoles et kérosènes et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de $CO_2$. Dans ce contexte, la recherche de nouvelles charges issues de sources renouvelables constitue un enjeu d'une importance croissante. Parmi ces charges, on peut citer par exemple les huiles végétales (alimentaires ou non) ou issues d'algues et les graisses animales. Ces charges sont principalement composées de triglycérides et d'acides gras libres, ces molécules comprenant des chaînes hydrocarbonées d'acides gras avec un nombre d'atomes de carbone compris entre 4 et 24, et un nombre d'insaturations généralement compris entre 0 et 3, avec des valeurs plus élevées pour les huiles d'algues par exemple. La masse moléculaire très élevée (>600g/mol) des triglycérides et la viscosité élevée des charges considérées font que leur utilisation directe ou en mélange dans les bases carburants posent des difficultés pour les moteurs modernes. Cependant, les chaînes hydrocarbonées qui constituent les triglycérides sont essentiellement linéaires et leur longueur (nombre d'atomes de carbone) est compatible avec les hydrocarbures présents dans les bases carburants.
Il est donc nécessaire de transformer ces charges pour obtenir des bases carburants (y compris le diesel et le kérosène) de bonne qualité répondant notamment aux spécifications directement ou après mélange avec d'autres coupes issues de pétrole brut. Le diesel doit répondre à la spécification EN590 et le kérosène doit satisfaire aux exigences décrites dans le « International Air Transport Association matériel (IATA) Guidance Material for Aviation Turbine Fuel Spécifications » comme ASTM D1655.

Une approche possible est la transformation catalytique de triglycérides en carburant paraffinique désoxygéné en présence d'hydrogène (hydrotraitement).

Lors de l'hydrotraitement les réactions subies par la charge contenant les triglycérides sont les suivantes:

- la réaction d'hydrogénation des insaturations des chaînes hydrocarbonées des acides gras des triglycérides et esters,
- les réactions de désoxygénations selon deux voies réactionnelles :

   ∘ l'hydrodésoxygénation (HDO) conduisant à la formation d'eau par consommation d'hydrogène et à la formation d'hydrocarbures de nombre de carbone ($C_n$) égal à celui des chaînes d'acides gras initiales,
   ∘ la décarboxylation/décarbonylation conduisant à la formation d'oxydes de carbone (monoxyde et dioxyde de carbone : CO et $CO_2$) et à la formation d'hydrocarbures comptant un carbone en moins ($C_{n-1}$) par rapport aux chaînes d'acides gras initiales,

- les réactions d'hydrodéazotation (HDN), par laquelle on désigne les réactions permettant d'enlever l'azote de la charge avec la production de $NH_3$.

L'hydrogénation des insaturations des chaînes hydrocarbonées (double liaisons carbone-carbone) est fortement exothermique et l'augmentation de température provoquée par le dégagement de chaleur peut conduire à des niveaux de température où la part des réactions de décarboxylation devient significative. Les réactions d'hydrodésoxygénation, y compris les réactions de décarboxylation, sont également des réactions exothermiques. L'hydrodésoxygénation est généralement favorisée à plus basse température par rapport à la décarboxylation/décarbonylation. Les réactions d'hydrodéazotation sont plus difficiles et nécessitent des températures supérieures à l'hydrogénation et l'hydrodésoxygénation. L'hydrodéazotation est généralement nécessaire, car les composés azotés sont des inhibiteurs de catalyseurs d'hydroisomérisation qui sont optionnellement utilisés après l'hydrotraitement. L'hydroisomérisation permet d'améliorer les propriétés à froid des bases carburants après l'hydrotraitement, notamment lorsque la production de kérosène est visée.

Par conséquent, un contrôle strict de la température dans la section hydrotraitement est nécessaire, une température trop élevée présente les inconvénients de favoriser les réactions secondaires indésirables comme la polymérisation, le craquage, le dépôt de coke et la désactivation du catalyseur.

Par ailleurs, lesdites charges issues de sources renouvelables contiennent également des quantités significatives d'impuretés. Lesdites impuretés peuvent contenir au moins un élément inorganique. Lesdites impuretés contenant au moins un élément inorganique comprennent essentiellement des composés contenant du phosphore telles que les phospholipides qui sont des agents émulsifiants et tensio-actifs qui gênent les opérations de raffinage et qui appartiennent à la famille des composés glycéridiques. Lesdites impuretés contenant au moins un élément inorganique peuvent également comprendre des éléments alcalino-terreux tels que les sels d'acides phosphatidiques ou encore des métaux, des métaux alcalins, les chlorophylles ou de transition sous forme diverse.

Les phospholipides complexes et polaires sont des molécules amphiphiles possédant une "tête" apolaire lipophile constituée de deux acides gras et une "tête" polaire hydrophile basée sur le couplage d'un acide phosphorique et d'une fonction de nature variable (amino-alcool, polyol...). Lesdites impuretés peuvent également être organiques. Lesdites impuretés organiques comprennent essentiellement de l'azote telles que les sphingolipides et les dérivés de chlorophylles non chélatées.

En effet, lesdites impuretés contenant au moins un élément inorganique, contenues dans lesdites charges sont miscibles dans l'huile dans les conditions d'hydrotraitement. Lors de la transformation des triglycérides et/ou des acides gras en hydrocarbures paraffiniques, lesdites impuretés se décomposent puis leurs résidus inorganiques se combinent pour former des sels non miscibles qui précipitent par exemple sous forme des phosphates mixtes de calcium et/ou de magnésium de type $Ca_xMg_y(PO_4)_z$, insolubles dans le milieu réactionnel. La précipitation desdits sels entraine l'accumulation de solides inorganiques dans le lit catalytique et par conséquent une augmentation de la perte de charge dans le réacteur, le bouchage du lit catalytique et la désactivation du catalyseur d'hydrotraitement par bouchage des pores. La durée de cycle se trouve réduite par la présence de ces impuretés. De plus, les impuretés azotées organiques et les impuretés azotées contenant au moins un élément inorganique présent dans ladite charge ne sont pas totalement éliminées lors de l'étape d'hydrotraitement. Il en résulte une perte de performance de l'étape d'hydroisomérisation optionnelle en aval.

La présente invention a pour objet de remédier à ces inconvénients.
Un objet de la présente invention est de fournir un procédé d'hydrotraitement de charges renouvelables permettant de favoriser majoritairement les réactions d'hydrodésoxygénation par la formation d'eau tout en permettant, à la fois :

-   de réaliser efficacement, par ce même procédé, l'hydrodéazotation nécessaire pour préserver l'activité catalytique de la section d'hydroisomérisation optionnelle et
-   de limiter le bouchage du ou des lits catalytiques contenant le catalyseur d'hydrotraitement, la désactivation dudit catalyseur et ainsi la perte de charge liée à l'accumulation de solides inorganiques dans le ou les lits catalytiques par la mise en œuvre en amont du ou desdits lits catalytiques, d'une étape de prétraitement spécifique, en présence d'un flux d'hydrogène, permettant, à la fois, l'élimination des impuretés inorganiques présentes dans ladite charge et l'hydrogénation au moins partielle des insaturations des triglycérides de ladite charge.

Un autre objet de la présente invention est de fournir un procédé d'hydrotraitement de charges renouvelables permettant de favoriser majoritairement les réactions d'hydrodésoxygénation et ainsi de maximiser le rendement en hydrocarbures paraffiniques tout en améliorant la durée de vie du système catalytique d'hydrotraitement par l'élimination des espèces insolubles colmatantes.

## Etat de l'art

US 2010/0133144 et US 7,232,935 décrivent un procédé de production d'hydrocarbures paraffiniques à partir d'une charge renouvelable.

De nombreux documents de l'art antérieur proposent des procédés d'hydrotraitement de charges renouvelables mettant en oeuvre une étape de prétraitement optionnelle en amont de l'hydrotraitement.

Le document US 2009/0318737 décrit un procédé pour produire des carburants et en particulier du gazole à partir de matières premières renouvelables telles que les huiles et graisses d'origine végétale et animale. Le procédé consiste à traiter une première partie d'une matière première renouvelable par hydrogénation et par désoxygénation dans une première zone de réaction et une seconde partie d'une matière première renouvelable par hydrogénation et par désoxygénation dans une seconde zone de réaction. Une partie du produit d'hydrocarbure paraffinique obtenu est recyclée à la première zone de réaction pour augmenter la solubilité de l'hydrogène dans le mélange réactionnel en utilisant un ratio recycle à la première partie de matières premières renouvelables compris entre 2 et 8 en volume (ratio massique entre 1.7 et 6.9). Le fait de maximiser la quantité d'hydrogène dans la phase liquide permet de réduire le taux de désactivation du catalyseur, ce qui permet de réduire la pression, de favoriser les réactions de décarboxylation/décarbonylation et de réduire les réactions d'hydrodésoxygénation, et donc de réduire la consommation d'hydrogène. Aucune information n'est donnée quant à la quantité d'azote dans les matières premières et les effluents paraffiniques. La charge issue de matières premières renouvelables peut avantageusement subir une étape de prétraitement de manière à éliminer les contaminants tels que par exemples les métaux alcalins présents dans ladite charge. L'étape de prétraitement peut consister en un échange d'ions sur une résine, un lavage acide, l'utilisation de lits de garde avec ou sans catalyseur de démetallation ou l'extraction au solvant et la filtration.

La demande de brevet EP 2 226 375 propose un procédé d'hydrogénation en continu d'une charge issue de sources renouvelables contenant des triglycérides dans un système de réacteur à lit fixe ayant plusieurs lits catalytiques disposés en série et comprenant un catalyseur d'hydrogénation en utilisant moins de recycle et requérant par conséquent une transformation limitée des unités existantes. La charge est introduite par une injection étagée de façon que les différents lits catalytiques reçoivent de plus en plus de charge dans le sens de l'écoulement. Le liquide recyclé n'est ajouté qu'en amont de la première zone catalytique. Cette limitation de la quantité de produit recyclé dans le réacteur permet de limiter le débit total dans le réacteur, puis la charge hydraulique en aval du réacteur. La plage préférée de recycle au total de la charge fraiche est inférieur à 1, et de préférence inférieur à 0,5 en poids. Le rapport de diluant sur charge fraîche entrant dans chaque lit catalytique est inférieur ou égal à 4 en poids. La température d'entrée est identique pour chaque lit.

La demande EP 2 226 375 privilégie la voie hydrodésoxygénation par élimination de l'oxygène et la formation de l'eau, plutôt que l'élimination de l'oxygène par des réactions de décarboxylation grâce à un contrôle des températures d'entrée dans les lits catalytiques. Le document EP 2 226 375 ne mentionne pas le problème de la présence des contaminants inorganiques dans ladite charge.

La demande de brevet US 2009/0266743 décrit un procédé de traitement d'une charge contenant des triglycérides seule ou en mélange avec une charge hydrocarbonée telle que par exemple une charge distillat moyen et en particulier une charge gazole. Le procédé de traitement consiste en un prétraitement thermique de ladite charge à une température comprise entre 40 et 540°C, éventuellement en présence d'un gaz tel que l'hydrogène, l'azote, l'hélium, le monoxyde de carbone et le dioxyde de carbone, suivi d'un hydrotraitement pour produire un carburant de type gazole.

La demanderesse a observé que la teneur en azote dans la matière première renouvelable peut varier considérablement en fonction de l'origine de la matière. En particulier, la teneur en azote est généralement plus élevée dans les graisses animales que dans les huiles végétales. En outre, le réglage de température dans les différentes zones catalytiques du réacteur d'hydrotraitement à des niveaux aussi bas que possible, afin de favoriser les réactions d'hydrodésoxygénation conduisant à la formation d'eau, peut entraîner des difficultés pour atteindre des niveaux faibles de la teneur en azote dans le combustible paraffinique produit après hydrotraitement. Ainsi, il est bien connu que les réactions d'hydrodéazotation (HDN) sont plus difficiles à réaliser que les réactions d'hydrodésulfuration (HDS) ou des réactions d'hydrodésoxygénation (HDO), et nécessitent par conséquent des températures plus élevées pour atteindre le même niveau. Une teneur trop élevée en composés azotés dans le carburant paraffinique produit par le procédé d'hydrotraitement provoque une moins bonne performance dans l'hydroisomérisation optionnelle en aval. L'hydroisomérisation (HIS) peut être avantageuse pour produire du diesel avec des propriétés d'écoulement à froid améliorée et/ou pour produire du kérosène répondant aux spécifications en point de disparition des cristaux (freezing point selon le terme anglo-saxon). Afin de compenser cet effet, il serait alors nécessaire d'augmenter la sévérité de la section HIS, conduisant à un rendement plus faible en produits de valeur comme le carburant diesel et le kérosène, et à un cycle réduit, et par conséquent à une augmentation des coûts d'exploitation.

La demanderesse a donc mis en œuvre en amont du ou des lits catalytiques contenant le catalyseur d'hydrotraitement et de façon à augmenter la durée de vie dudit catalyseur d'hydrotraitement, une étape de prétraitement poussée de ladite charge, en présence d'un flux d'hydrogène, permettant l'élimination des contaminants inorganiques, insolubles dans les conditions d'hydrotraitement, présents dans ladite charge et l'hydrogénation au moins partielle des insaturations des triglycérides de ladite charge. Ladite étape de prétraitement spécifique permet également de renforcer l'élimination des composés azotés présents dans ladite charge par adsorption de composés azotés spécifiques.

**Objet de l'invention**

L'objectif de la présente invention est alors, par la combinaison de l'introduction de la charge en proportions croissantes couplée avec un recycle important sur la première zone et de la mise en œuvre d'une étape de prétraitement spécifique opérant en présence d'un flux d'hydrogène et utilisant une partie du recycle, de proposer un procédé d'hydrotraitement de charges renouvelables permettant à la fois :

- de permettre à la fois l'élimination des impuretés inorganiques, insolubles dans les conditions d'hydrotraitement, présents dans ladite charge et l'hydrogénation au moins partielle des insaturations des triglycérides de ladite charge,
- de favoriser majoritairement les réactions d'hydrodésoxygénation par la formation d'eau
- de réaliser efficacement par ce même procédé l'hydrodéazotation nécessaire pour préserver l'activité catalytique de la section d'hydroisomérisation optionnelle
- de renforcer l'élimination de composés azotés et
- d'améliorer la durée de vie du système catalytique d'hydrotraitement.

Ainsi, la présente invention concerne un procédé d'hydrotraitement tel que défini dans la revendication 1.

Un intérêt de la présente invention est de pouvoir effectuer l'hydrodéazotation et l'hydrodésoxygénation dans une même zone catalytique sans faire appel à un deuxième réacteur d'hydrodéazotation en aval. En effet, l'introduction de la charge en proportions croissantes couplée avec un recycle important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation. Par ailleurs, l'étape de prétraitement mise en œuvre en amont du ou des lits catalytiques contenant les catalyseurs d'hydrotraitement permet également de renforcer l'élimination des composés azotés présents dans ladite charge par élimination des impuretés et notamment des composés azotés spécifiques tels que que les amino-alcools de type phosphatidylcholine, phosphatidyléthanolamine, phosphatydylsérine et les sphingolipides et les chlorophylles.

Un autre intérêt de la présente invention est de limiter la désactivation dudit catalyseur et la perte de charge liée à l'accumulation de solides inorganiques dans le ou les lits catalytiques et ainsi le bouchage du ou des lits catalytiques contenant le catalyseur d'hydrotraitement par la mise en œuvre en amont du ou desdits lits catalytiques, de ladite étape de prétraitement spécifique opérant en présence d'un flux d'hydrogène, permettant à la fois, l'élimination des contaminants inorganiques présents dans ladite charge par précipitation/cristallisation et/ou adsorptions à chaud et l'hydrogénation au moins partielle des insaturations des triglycérides de ladite charge.
Ladite étape de prétraitement opérant en présence d'hydrogène, permet également une préchauffe de l'effluent à hy-drotraiter par la chaleur dégagée par les réactions exothermiques d'hydrogénation totale ou partielle des insaturations des triglycérides. Cette étape de prétraitement opérant en présence d'hydrogène, offre ainsi la possibilité d'une meilleure intégration thermique du procédé conduisant à la minimisation des débits de recycle mis en œuvre et à la réduction des coûts opératoires.

Un autre intérêt de la présente invention consiste à privilégier la voie hydrodésoxygénation par élimination de l'oxygène et la formation de l'eau, plutôt que l'élimination de l'oxygène par des réactions de décarboxylation par le contrôle des températures adaptée à l'hydrodésoxygénation en entrée de chaque zone catalytique. Les avantages apportés par cette solution sont une augmentation du rendement en hydrocarbures paraffiniques, et la réduction de la quantité du $CO/CO_2$ formé, ce qui permet de limiter l'effet inhibiteur du CO sur l'activité du catalyseur d'hydrotraitement. Le fait de privilégier la voie hydrodésoxygénation permet également de réduire la corrosion due à la présence de $CO_2$ dans le réacteur.
La limitation de la quantité de produit recyclé dans le réacteur permet également de limiter le débit total dans le réacteur, puis la charge hydraulique en aval du réacteur.

## Description

Le procédé selon la présente invention consiste à convertir en hydrocarbures paraffiniques, et plus précisément en distillats moyens (kérosènes et/ou gazoles), une large gamme de charges d'origine renouvelable, essentiellement composées de triglycérides et d'acides gras. Ces charges sont généralement caractérisées par une masse molaire élevée (supérieure à 800 g/mole le plus souvent), et les chaînes d'acides gras qui les composent ont un nombre d'atomes de carbone compris entre 4 et 24, et un nombre d'insaturations par chaîne généralement compris entre 0 et 3, avec des valeurs supérieures qui peuvent être atteintes sur certaines charges spécifiques. Parmi les charges qui peuvent être converties par le procédé selon la présente invention, on peut citer, cette liste n'étant pas exhaustive : les huiles végétales telles que les huiles de colza, de jatropha, de soja, de palme, de tournesol, d'olive, de coprah, de camelina, des huiles de poisson ou des huiles algales hétérotrophes ou autotrophes, ou encore des graisses animales telles que le suif de bœuf, ou encore des résidus issus de l'industrie papetière (tels que le "tall oil"), ou des mélanges de ces diverses charges. Selon l'invention, les charges issues de sources renouvelables sont choisies parmi les huiles et graisses d'origine végétale ou animale, ou des mélanges de telles charges, contenant des triglycérides et/ou des acides gras libres et/ou des esters.

Toutes ces charges contiennent des teneurs en oxygène élevées, ainsi que, à des teneurs très variables selon l'origine des charges, des quantités significatives d'impuretés pouvant contenir au moins un élément inorganique et des impuretés organiques comprenant essentiellement de l'azote telles que décrites plus haut. Lesdites charges peuvent généralement comprendre une teneur en composés inorganiques comprise entre 0,1 et 2500 ppm. Les teneurs en azote et en soufre sont généralement comprises entre 1 ppm et 100 ppm poids environ et de préférence inférieures à 100 ppm, selon leur nature. Elles peuvent atteindre jusqu'à 1% poids sur des charges particulières.

Les charges issues de sources renouvelables utilisées dans le procédé selon l'invention sont brutes, ou ont subi au moins une étape de raffinage de l'huile à des fins alimentaires connue de l'homme du métier telle que par exemple une étape de dégommage ou de déphosphatation. Lesdites charges ayant subi au moins ladite étape de raffinage sont dites semi-raffinées et contiennent à l'issue de ce traitement encore jusqu'à 20 ppm de phosphore, calcium, magnésium, fer et/ou zinc, sous forme de phospholipides.

Dans la suite, l'invention sera décrite en se référant aux figures pour faciliter la compréhension, les figures ne limitant pas le caractère général de l'invention.

**Prétraitement**

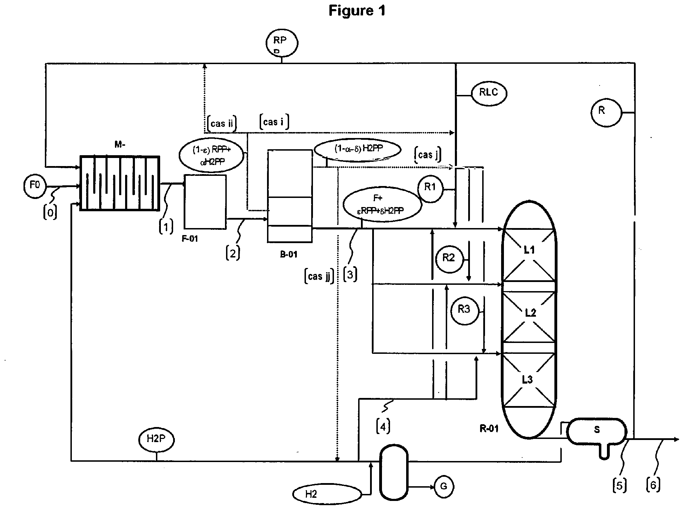

La charge brute ou ayant éventuellement subi au moins ladite étape de raffinage, encore appelée la charge fraîche totale F0, est injectée dans la ligne (0) représentée dans la figure 1.

Conformément à l'étape a) du procédé selon l'invention, le flux de la charge fraiche totale F0 est mélangé avec un flux RPP constitué par au moins une partie de la fraction liquide recyclée R contenant des hydrocarbures paraffiniques issue de l'étape d) de séparation et avec un flux de gaz riche en hydrogène H$_2$P.

En effet, selon l'invention, au moins une partie R de la fraction liquide contenant les hydrocarbures paraffiniques produit par le procédé de traitement selon l'invention et issue de l'étape d) de séparation est recyclée et est divisée en au moins un flux RLC, qui est recyclée en amont des zones catalytiques selon l'étape e) du procédé selon l'invention et en un flux RPP constitué par au moins une partie de la fraction liquide R contenant des hydrocarbures paraffiniques, recyclée en amont de la zone de prétraitement.

De préférence, ledit flux de gaz riche en hydrogène H$_2$P est constitué par au moins une partie de la fraction gazeuse issue de l'étape d) de séparation ayant subi une étape de purification, éventuellement en mélange avec de l'hydrogène frais.

De préférence, le flux de la charge fraiche totale F0 est mélangé avec lesdits flux RPP et H$_2$P dans un équipement permettant la mise en contact de flux et le mélange homogène desdits flux.

Conformément à l'invention, le mélange de la charge fraiche totale F0 et desdits flux RPP et H$_2$P est amené à une température comprise entre 160 et 210°C. Ledit mélange peut avantageusement être chauffé par l'apport de chaleur des flux RPP et H$_2$P. Dans le cas ou la chaleur apportée par les flux RPP et H$_2$P est insuffisante, ledit mélange est avantageusement chauffé par tous les moyens connus de l'homme du métier tels que par exemple par passage dans un échangeur, ou un four.

La proportion du flux RPP introduite dans l'étape a) du procédé selon l'invention par rapport au flux de charge fraiche totale F0 est telle que le rapport de débit massique RPP/FO est compris entre 0,1 et 5, de préférence entre 0,5 et 3 et de manière préférée entre 1 et 3.

La proportion du flux H$_2$P introduite dans l'étape a) du procédé selon l'invention par rapport au flux de charge fraiche totale F0 est telle que le rapport du débit volumique normal du flux riche en hydrogène sur le débit volumique de charge fraiche H$_2$P/F0 est compris entre 300 et 1000NL/L et de manière préférée entre 400 et 900NL/L.

Conformément à l'étape b) du procédé selon l'invention, ledit mélange est introduit, via la conduite (1) dans une zone de prétraitement F-01 représentée sur la figure, dans laquelle l'écoulement du mélange se fait au travers d'un milieu poreux constitué d'un lit de particules appelé lit fixe, ledit lit de particules étant constitué de matériaux solides catalytiques en mélange ou pas avec des matériaux solides non catalytiques et ledit lit fixe présentant un taux de vide compris entre 0,25 et 0,8.

Lesdites particules constituées de matériaux solides catalytiques en mélange ou pas avec des matériaux solides non catalytiques présentent avantageusement une surface spécifique comprise entre 0,5 et 320 m$^2$/g.

Selon l'invention, lesdits matériaux solides catalytiques utilisés dans l'étape b) de prétraitement sont identiques aux catalyseurs utilisés dans l'étape c) d'hydrotraitement. Lesdits catalyseurs sont décrits en détail plus bas.

Lesdits matériaux solides catalytiques peuvent également avantageusement être des catalyseurs usagés issus des procédés de raffinage ou des traitements des huiles végétales.

Selon l'invention, les matériaux solides non catalytiques utilisés dans l'étape b) de prétraitement du procédé selon l'invention sont des matériaux solides dépourvus de métaux catalytiques choisis dans les groupes 6 et 8 à 12 de la classification périodique. Les matériaux solides non catalytiques utilisés dans l'étape b) de prétraitement du procédé selon l'invention sont avantageusement choisis parmi les oxydes réfractaires poreux, de préférence choisis parmi l'alumine, la silice, l'alumine activée, les silices alumines, les oxydes métalliques et les oxydes non métalliques. Lesdits matériaux solides non catalytiques peuvent avantageusement être également choisis parmi les céramiques oxydes, les céramiques non oxydes ou les céramiques composites ou des matériaux tels que les carbures de silicium, les charbons actifs, les aluminates de calcium, les métaux et le graphite, les argiles, la magnésie. De manière très préférée, lesdits matériaux solides non catalytiques sont choisis parmi les oxydes réfractaires poreux.

Dans le cas où lesdits matériaux solides non catalytiques sont des oxydes réfractaires poreux, les oxydes réfractaires poreux préférés présentent une macroporosité.

De préférence, lesdits oxydes réfractaires poreux présentent un volume macroporeux, mesuré par intrusion au mercure, c'est à dire un volume des pores dont le diamètre moyen est supérieur à 500 A, supérieur à 0,1 ml/g, et de manière préférée, compris entre 0,125 et 0,4 ml/g. Lesdits oxydes réfractaires poreux présentent également avantageusement un volume poreux total supérieur à 0,60 ml/g, et de préférence compris entre 0,625 et 1,5 ml/g et une surface spécifique exprimée en S$_{BET}$ avantageusement comprise entre 30 m2/g et 320 m2/g.

Selon un mode préféré, ledit lit de particules est constitué de matériaux solides catalytiques et de matériaux solides non catalytiques.

Dans ce cas, lesdites particules constituées de matériaux solides catalytiques et non catalytiques peuvent être agencées dans ledit lit, en mélange hétérogène ou homogène. Selon un premier mode d'agencement hétérogène, ledit lit de particules est avantageusement constitué de deux zones distinctes, une première zone contenant les particules constituées de matériaux solides catalytiques et une seconde zone contenant les particules constituées de matériaux solides non catalytiques. Selon un deuxième mode d'agencement hétérogène dudit lit, un gradient de concentration en particules constituées de matériaux solides catalytiques est appliqué, la proportion de matériaux solides catalytiques par rapport aux matériaux solides totaux étant comprise entre 10 et 100 % en entrée de lit puis décroissante jusqu'à une teneur nulle en matériaux solides catalytiques en sortie de lit. Selon un troisième mode d'agencement hétérogène dudit lit, l'agencement dudit lit de particules est constitué de deux zones distinctes, une première zone contenant les particules constituées de matériaux solides non catalytiques et une seconde zone contenant les particules constituées de matériaux solides catalytiques.

Selon un mode d'agencement homogène dudit lit de particules, ledit lit de particules comprend une proportion en particules constituées de matériaux solides catalytiques constante sur tout le volume dudit lit et une proportion en particules constituées de matériaux solides catalytiques comprise entre 100 et 10% poids par rapport aux matériaux solides totaux. Lesdites particules constituées de matériaux solides non catalytiques sont avantageusement dispersées à l'intérieur du lit de particules de matériaux solides catalytiques et présentent également une proportion constante sur tout le volume dudit lit.

Lesdites particules du lit fixe utilisé dans la zone de prétraitement selon la présente invention peuvent avantageusement être mises en forme et de préférence sous forme de particules sphériques, extrudées oblongues, cylindriques, creuses ou pleines, cylindriques torsadées, multilobées, par exemple avec un nombre de lobes compris entre 2 et 5 ou sous forme d'anneaux. De manière préférée, lesdites particules sont sous forme de particules sphériques ou extrudées, avec un diamètre compris entre 0,5 et 20 mm et de préférence entre 0,5 et 10 mm.

Lesdites particules du lit fixe peuvent avantageusement présenter des formes géométriques plus particulières afin d'augmenter son taux de vide. Lesdites particules du lit fixe peuvent également avantageusement présenter les formes suivantes : cylindres creux, anneaux creux, anneaux de Rashig, cylindres creux dentelés, cylindres creux crénelés, roues de charrettes, selle de Blend, cylindres à multiples trous.

Leur diamètre extérieur varie avantageusement entre 1 et 35 mm.

Lesdites particules du lit fixe peuvent avantageusement être utilisées seules ou en mélange.

Il est particulièrement avantageux de superposer des matériaux différents, dans au moins deux lits fixes différents de hauteur variable. Il est également particulièrement avantageux de superposer des particules de forme différentes, les particules formant le lit fixe ayant le plus fort taux de vide étant de préférence utilisées dans le ou les premiers lits fixes, en entrée de la zone de prétraitement.

Ladite étape b) de prétraitement, en présence d'hydrogène de la charge brute ou semi raffinée, après chauffage du mélange du flux de la charge fraiche totale F0 avec lesdits flux RPP et $H_2P$ dans les bonnes conditions de température et passage dudit mélange sur ledit lit fixe de prétraitement, permet, d'une part l'hydrogénation au moins partielle, et éventuellement totale, des insaturations des triglycérides de la charge traitée, l'augmentation de la température dudit mélange due à l'exothermie des réactions d'hydrogénation et enfin la décomposition des impuretés contenant au moins un élément inorganique puis la recombinaison de leurs résidus inorganiques pour former des sels non miscibles qui précipitent et sont insolubles dans le milieu réactionnel. Cette précipitation est favorisée car les impuretés de nature polaire sont moins miscibles dans le mélange huile totalement ou partiellement hydrogénée additionnée de paraffines RPP que dans la charge huile seule. Concentrées aux interfaces entre la phase riche en triglycérides et la phase riche en paraffines et en contact avec le milieu poreux de l'étape de prétraitement, de préférence constituées de solides présentant une grande surface de contact, les impuretés inorganiques précipitent à la surface de ces derniers. Ledit précipité solide non miscible dans le milieu réactionnel se dépose sur le milieu poreux, encore appelé lit de garde avec la particularité que ledit lit de garde est utilisé avec une température minimum d'activation de la réaction thermique de cristallisation et/ou précipitation recherchée.

Ladite étape de prétraitement, opérant en présence d'hydrogène, mise en œuvre en amont du ou des lits catalytiques contenant les catalyseurs d'hydrotraitement permet donc l'élimination des impuretés inorganiques présentes dans la charge.

De plus, ladite étape de prétraitement, opérant en présence d'hydrogène, permet également de renforcer l'élimination des composés azotés présents dans ladite charge et notamment des impuretés azotées organiques et des impuretés azotées contenant au moins un élément inorganique tels que que les amino-alcools de type phosphatidylcholine, phosphatidyléthanolamine, phosphatydylsérine et les sphingolipides et les chlorophylles.

En effet, la présence de porosité liée à la nature du solide mis en œuvre dans l'étape de prétraitement, ou la nature des solides issus des cristallisations ou précipitations des impuretés inorganiques, permettent également l'adsoption des impuretés azotées telles que les sphingolipides ou les chlorophylles ou tout autre composé azoté résiduel.

Enfin, ladite étape de prétraitement en présence d'hydrogène, permet également une préchauffe de l'effluent à hydrotraiter par la chaleur des réactions d'hydrogénation totale ou partielle des insaturations des triglycérides. Cette étape de prétraitement en présence d'hydrogène, offre ainsi la possibilité d'une meilleure intégration thermique du procédé conduisant à la minimisation des débits de recycle mis en œuvre et à la réduction des coûts opératoires.

Selon l'invention, ladite étape b) de prétraitement comprend en plus de la zone de prétraitement, une zone de séparation.

L'effluent issu de la zone de prétraitement est introduit dans la zone de séparation, de manière à séparer au moins un effluent contenant des triglycérides ($F + \varepsilon RPP + \delta H_2PP$), au moins un effluent liquide riche en parraffines (($1-\varepsilon$) $RPP + \alpha H_2PP$) et au moins un effluent gazeux riche en hydrogène $(1-\delta-\alpha)H_2PP$ avec ($\alpha + \delta$) compris entre 0 et 1. Selon l'invention, $\varepsilon$ et $\delta$ sont compris entre 0,01 et 0,5. $H_2PP$ désigne le flux de gaz riche en hydrogène après passage dans la zone de prétraitement et avant le passage dans la zone de séparation.

Ledit effluent issu de la zone de prétraitement est introduit via la conduite (2) dans la zone de séparation B-01 représentée sur la figure 1.

Ledit effluent riche en paraffines (($1-\varepsilon$) $RPP + \alpha H_2PP$), de préférence constitué à au moins 90% poids en paraffines est avantageusement séparé. Ledit effluent (($1-\varepsilon$) $RPP + \alpha H_2PP$) est soit avantageusement réinjecté avec le flux RLC vers les zones catalytiques selon le cas i) représenté sur la figure 1, soit recyclé en amont de la zone de prétraitement en mélange avec le flux RPP selon le cas ii).

Ledit effluent gazeux riche en hydrogène $(1-\delta-\alpha)H_2PP$ est soit avantageusement réinjecté avec le flux RLC vers les zones catalytiques selon le cas j) représenté sur la figure 1, soit recyclé en amont de l'étape b) de prétraitement en mélange avec le flux $H_2P$ selon le cas jj).

$\varepsilon$ représente la fraction du flux paraffinique RPP entrainé avec la charge F à l'issue de l'étape b) de prétraitement.

$\delta$ représente la fraction du flux gazeux riche en hydrogène entrainé ou éventuellement dissous dans la charge F à l'issue de l'étape b) de prétraitement.

$\alpha$ représente la fraction du flux gazeux riche en hydrogène entrainé ou éventuellement dissous dans l'effluent liquide riche en paraffine à l'issue de l'étape b) de prétraitement.

Conformément à l'étape c) d'hydrotraitement du procédé selon l'invention, l'effluent issu de l'étape b) de prétraitement ($F + \varepsilon RPP + \delta H_2PP$) ayant subi une étape de séparation d'un effluent riche en paraffines, est divisé en au moins un certain nombre de différents flux partiels ($F1 + \varepsilon_1 RPP + \delta_1 H_2PP$) à ($Fn + \varepsilon_n RPP + \delta_n H_2PP$) égal au nombre de zones catalytiques n dans le réacteur, le premier flux partiel ($F1 + \varepsilon_1 RPP \, \delta_1 H_2PP$) est injecté dans la première zone catalytique, le deuxième flux partiel ($F_2 + \varepsilon_2 RPP + \delta_2 H_2PP$) est injecté dans la deuxième zone catalytique et ainsi de suite, si n est supérieur à 2. Les différents flux partiels sont injectés dans les zones catalytiques successives dans des proportions croissantes de telle manière que F1/F soit inférieur à F2/F, lui-même inférieur a F3/F et ainsi de suite jusqu'à F(n-1)/F soit inférieur à Fn/F, pour produire un effluent contenant des hydrocarbures paraffiniques.

Lesdits différents flux partiels ($F1 + \varepsilon_1 RPP + \delta_1 H_2PP$) à ($Fn + \varepsilon_n RPP + \delta_n H_2PP$) égal au nombre de zones catalytiques n dans le réacteur, issus de l'effluent riche en triglycérides ($F + \varepsilon RPP + \delta H_2PP$) issu de l'étape b) de prétraitement via la conduite (3), sont mélangés avec un gaz riche en hydrogène (4). Ledit gaz riche en hydrogène peut également contenir d'autres composés hydrocarbures inertes, c'est à dire qui ne réagissent pas en tant que tels avec les constituants de la charge ou des traces de composés soufrés tels que l'$H_2S$. L'hydrogène peut avantageusement venir d'un appoint d'hydrogène et/ou du recyclage du gaz riche en hydrogène issu de l'étape de séparation mise en œuvre en aval de l'étape d'hydrotraitement. En pratique, l'hydrogène d'appoint peut provenir du reformage à la vapeur ou du reformage catalytique conventionnel éventuellement additionné d'hydrogène en provenance du reformage à la vapeur et des gaz légers issus de l'étape d) de séparation, et sa pureté en hydrogène est avantageusement comprise entre 75 et 95 % volume, les autres gaz présents étant généralement le méthane, l'éthane, le propane et le butane. Le gaz riche en hydrogène issu de l'étape de séparation mise en œuvre en aval de l'étape d'hydrotraitement ou encore issu de l'étape de fractionnement mise en œuvre après l'étape d'hydroisomérisation optionnelle, subit de préférence préalablement, un ou plusieurs traitements de purification intermédiaire avant d'être recyclé dans le procédé d'hydrotraitement et/ou d'hydroisomérisation.

Selon une caractéristique de l'invention, l'hydrogène utilisé est en excès par rapport à la consommation théorique, l'excédent d'hydrogène représente au moins 50% de cette consommation théorique, de préférence entre 75 et 400%, et de façon encore préférée entre 100% et 300%, 150% étant une valeur typique. La quantité d'hydrogène mise en jeu est contrôlée par la pression partielle d'hydrogène.

Pour une compréhension plus aisée de la présente invention, les définitions suivantes sont introduites. Elles font référence à la figure 1. Le réacteur comprend n zones catalytiques. Tous les flux sont exprimés en débit massique.

F0: flux total de la charge renouvelable traitée dans le procédé

$F + \varepsilon RPP + \delta H_2PP$: effluent issu de l'étape b) de prétraitement contenant la charge renouvelable au moins partiellement hydrogénée et éventuellement des paraffines ($\varepsilon RPP$) et de l'hydrogène dissous ou non ($\delta H_2PP$)

$F1 + \varepsilon_1 RPP + \delta_1 H_2PP + R1$ : flux partiel de la charge renouvelable contenant éventuellement des paraffines ($\varepsilon_1 RPP$) et de l'hydrogène dissous ou non ($\delta_1 H_2PP$) et flux partiel de recycle R1 introduits dans la première zone catalytique Z1

F2+ $\varepsilon_2$RPP+$\delta_2$H2PP + R2 : flux partiel de la charge renouvelable contenant éventuellement des paraffines ($\varepsilon_2$RPP) et de l'hydrogène dissous ou non ($\delta_2H_2$PP) et flux partiel de recycle R2 introduits dans la deuxième zone catalytique Z2 et ainsi de suite...

Fn+$\varepsilon_n$RPP+ Rn +$\delta_n$H2PP : flux partiel de la charge renouvelable contenant éventuellement des paraffines ($\varepsilon_n$RPP) et de l'hydrogène dissous ou non ($\delta_nH_2$PP) et flux partiel de recycle Rn introduits dans la dernière zone catalytique Zn.

R: flux de recycle total : fraction liquide recyclée contenant les hydrocarbures paraffiniques issus de l'étape d) de séparation. R est divisée en un flux RLC et un flux RPP.

RLC : flux de recycle vers la zone catalytique , constitué par au moins une partie de la fraction liquide recyclée R contenant des hydrocarbures paraffiniques, recyclée dans au moins la première zone catalytique Z1. RLC peut être divisé en différents flux R1 à Rn selon le nombre de zones catalytiques dans lequel il est envoyé.

RPP: flux constitué par au moins une partie de la fraction liquide recyclée R contenant des hydrocarbures paraffiniques, recyclée en amont de la zone de prétraitement.

Le taux de recycle total (RT) est défini comme le rapport massique entre le flux total de paraffines du recycle envoyé dans les zones catalytiques Z1 à Zn et le flux total de la charge renouvelable envoyé dans les zones catalytiques Z1 à Zn après passage dans la zone de prétraitement (F) :

$$RT = (RLC+RPP)/F = R/F$$

De préférence, le taux de recycle total (RT) est de préférence inférieur à 1.0, et de manière encore préférée inférieur à 0.5, lesdits flux étant exprimés en débit massique.

Le taux de recycle local vers la première zone catalytique (RF1) est défini comme le rapport massique entre le flux de parraffines du recycle envoyé dans la première zone catalytique Z1 c'est-à-dire (R1+$\varepsilon_1$RPP) et le flux partiel de la charge introduite dans la première zone catalytique 1 (F1) :

$$RF1 = (R1+\varepsilon_1 RPP)/F1$$

Excepté durant la phase de démarrage du procédé, l'agent diluant qui est recyclé au niveau de la zone de prétraitement et au niveau des zones catalytiques d'hydrotraiment Z1-Zn est constitué par une partie du produit hydrocarbure liquide sortant de la section hydrotraitement. Cet agent diluant recyclé à l'entrée du prétraitement et à l'entrée d'au moins une zone catalytique est appelé aussi flux de recycle total R dans la suite de cette description, et son débit est noté R dans les définitions qui précèdent. La section hydrotraitement du procédé étant conçue de façon à convertir totalement les charges traitées, le flux de recycle total R produit est un flux d'hydrocarbure exempt d'oxygène, ce qui signifie que sa teneur en oxygène est inférieure à la limite de détection analytique, et est essentiellement composé de paraffines. En conséquence, ledit flux de recycle total est inerte vis-à-vis des réactions d'hydrotraitement, et joue ainsi pleinement son rôle de diluant de la charge, ce qui permet de limiter l'élévation de température dans les zones catalytiques, due à l'exothermie des réactions qui s'y produisent. Néanmoins, l'objectif est, pour une capacité donnée, c'est à dire pour un débit massique donné de charge traitée, noté F0, de limiter la quantité de recycle liquide injecté dans les zones catalytiques, notée RLC, ceci afin de limiter le débit total du flux alimentant ces zones catalytiques. Ceci permet d'utiliser des réacteurs d'hydrotraitement de dimensions comparables à celles des réacteurs d'hydrotraitement de coupes pétrolières comme les gazoles (et donc de limiter les coûts), de limiter les pertes de charges et d'éviter des phénomènes d'engorgement du réacteur. Par ailleurs, la zone de prétraitement mise en œuvre en amont du ou des lits catalytiques contenant le catalyseur d'hydrotraitement utilise également un flux RPP constitué par au moins une partie de la fraction liquide R contenant des hydrocarbures paraffiniques, inerte, qui permet d'accélérer les phénomènes d'élimination des impuretés inorganiques par précipitation et/ou adsorptions de ces dernières.

Il a été découvert qu'il était avantageux d'injecter la charge dans les différentes zones catalytiques (débit massique (F1+R1+$\delta_1$RPP) injecté dans la zone Z1, F2+R2+$\varepsilon_2$RPP dans la zone Z2, etc...) en faisant en sorte que des proportions croissantes de charge soient injectées dans les zones catalytiques successives. Ceci se traduit par la relation suivante :

F1/F inférieur ou égal à F2/F, lui-même inférieur on égal à F3/F, etc..., et plus généralement F(n-1)/F inférieur ou égal à Fn/F, pour le cas général où n est le nombre de zones catalytiques mises en jeu. L'avantage apporté par une telle distribution de la charge dans les différentes zones catalytiques successives, réside dans le fait que les températures de sortie des différentes zones suivent un profil montant, ce qui permet d'atteindre des températures suffisantes afin de réduire le plus possible les teneurs résiduelles en azote non éliminé dans l'étape de prétraitement dans le produit sortant des différentes zones, ceci dans le but de préserver l'activité catalytique de la section d'hydroisomérisation en aval.

Conformément à l'invention, un flux R1 est recyclé en amont de la première zone catalytique Z1 de telle sorte que le rapport massique entre le flux de paraffines $(R1+\varepsilon_1RPP+\delta_1H_2PP)$ injecté en entrée de ladite première zone catalytique Z1 et le flux partiel F1 de charge introduite dans Z1, soit supérieur ou égal à 10.0, lesdits flux étant exprimés en débit massique. Ce rapport est aussi appelé recycle local (RF1) et est défini plus haut. L'utilisation d'un tel agencement des flux de charge et de recycle liquide permet :

- d'une part, d'obtenir une température homogène dans toute la section du réacteur en sortie de zone Z1.
- d'autre part, d'atteindre en sortie de zone Z1 une température suffisante, permettant d'amorcer les réactions d'hydrodéazotation et ainsi de réduire les teneurs résiduelles en azote dans l'hydrocarbure liquide produit en sortie de la zone Z1.
- d'atteindre des températures supérieures en sortie des zones catalytiques suivant la zone Z1 (zones Z2 à Zn), et suffisantes pour augmenter les taux d'élimination de l'azote.

En effet, l'introduction de la charge en proportions croissantes couplée avec un recycle local important sur la première zone, permet d'atteindre par un profil montant de températures, une zone suffisamment chaude en fin de zone catalytique pour permettre l'hydrodéazotation tout en maintenant la température suffisamment basse à l'entrée de la zone catalytique pour favoriser les réactions d'hydrodésoxygénation. Le recycle local supérieur ou égal à 10 signifie qu'on injecte relativement peu de charge sur la première zone, permettant ainsi d'injecter le restant de la charge dans des proportions plus importantes et croissantes dans les zones catalytiques successives. L'augmentation de la quantité de la charge injectée dans les zones successives permet d'obtenir un profil montant en températures d'entrée et de sortie des différentes zones.

Les flux entrant dans la seconde zone catalytique Z2 sont donc :

- au moins une partie de la charge additionnée de paraffines issue de la zone prétraitement injectée en entrée de zone Z2 $(F2+\varepsilon_2RPP+\delta_2H_2PP)$, telle que le rapport massique F2/F soit supérieur au rapport massique F1/F,
- le recycle liquide R1 injecté en entrée de zone Z1, composé quasi-exclusivement d'hydrocarbures paraffiniques et ayant traversé la zone Z1,
- l'effluent formé par la conversion de la charge dans la zone Z1, correspondant au débit F1. Les hydrocarbures liquides présents dans cet effluent sont exempts d'oxygène et quasi-exclusivement des hydrocarbures paraffiniques.
- éventuellement le recycle liquide R2, composé quasi-exclusivement d'hydrocarbures paraffiniques et constitué d'au moins une partie du flux de recycle vers la zone catlytique RLC.

Durant les phases de démarrage, une large gamme d'hydrocarbures peut être injectée, comme par exemple une coupe gazole légère, jusqu'à ce qu'une quantité suffisante de produit paraffinique soit disponible pour être recyclée en entrée d'au moins une zone catalytique.

La charge est alimentée par la ligne (0), comme le montre la figure 1, tandis que le gaz riche en hydrogène l'est par la ligne (4). La charge est injectée dans la zone de prétraitement en mélange avec le flux de paraffines RPP issu d'une partie du flux de recycle R issu d'une partie des paraffines produites en sortie de l'hydrotraitement. Le flux $F+\varepsilon RPP+\delta H_2PP$ sortie de la zone de prétraitement est distribué en différents flux $F1+\varepsilon_1RPP+\delta_2H_2PP$, $F2+\varepsilon_2RPP+\delta_3H_2PP$,..., $Fn+\varepsilon_nRPP+\delta_3H_2PP$ alimentant les différentes zones catalytiques successives. Le gaz riche en hydrogène (flux (4)) est distribué en autant de flux H1, H2, ..., Hn. Le flux $F1+\varepsilon_1RPP+\delta_1H_2P$ est mélangée au flux de gaz (H1), le flux $F2+\varepsilon_2RPP++\delta_2H2P$ est mélangé au flux de gaz $(H_2)$, et ainsi de suite jusqu'à la n-ième zone catalytique.

La température du flux en sortie de prétraitement $F+\varepsilon RPP+\delta H_2PP$ peut être ajustée afin d'atteindre une température inférieure à 300°C, de préférence inférieure à 260°C, et de manière encore préférée inférieure à 230°C. Elle doit être suffisante pour permettre un abaissement de viscosité suffisant et donc un transfert adéquat des bacs de stockage jusqu'à la section réactionnelle de l'hydrotraitement. De la même façon, la température du gaz riche en hydrogène, qui est mélangé à la charge, est la plus basse possible compatible avec l'opération du procédé, puisqu'il est avantageux pour le procédé de mélanger la charge à de l'hydrogène à basse température, de façon à abaisser la température par effet de quench appliqué aux produits hydrocarbures sortant des différentes zones catalytiques. En pratique, comme une élévation de température se produit lors de la compression du gaz riche en hydrogène, l'hydrogène est souvent refroidi après compression. De préférence, la température du gaz riche en hydrogène est comprise entre 40 et 150°C, par exemple 50°C.

La température du flux injecté à l'entrée de la zone catalytique Z1, c'est-à-dire de l'effluent issu de la zone de prétraitement $(F1+\varepsilon_1RPP++\delta H_2PP)$ et du recycle liquide R1 doit être soigneusement réglée. Selon l'invention, la température dudit flux injecté à l'entrée de la zone catalytique Z1 est au minimum de 230°C. Ceci permet l'amorçage de l'ensemble des réactions : réactions d'élimination de l'oxygène selon mécanisme conduisant à la formation d'eau, ou selon mécanisme de décarboxylation/ décarbonylation conduisant à la formation de $CO_2$ et CO, mais aussi réactions d'hydrodéazotation dans au moins une partie de cette zone catalytique. Cette température d'entrée peut être ajustée selon la nature de la charge. Avantageusement, la température à la sortie de la zone Z1 est supérieure à 250°C. Le volume de catalyseur mis en jeu dans cette zone catalytique est adapté de façon à ce que la conversion -c'est à dire le taux d'élimination de l'oxygène- soit complète en sortie de cette zone Z1.

En sortie de la zone catalytique Z1, est ajouté le second flux de charge F2+$\varepsilon_2$RPP+$\delta_2$H$_2$PP, qui représente une plus grande proportion de charge que celle injectée en entrée de zone Z1. Ce flux de charge est additionné au flux de gaz riche en hydrogène (H$_2$), et éventuellement du recycle liquide R2 constitué par au moins une partie du flux RLC lui même issu de la fraction liquide R contenant des hydrocarbures paraffiniques issue de l'étape de séparation d). Le mélange est injecté dans la zone réactionnelle, où il est mélangé à l'effluent provenant de la zone Z1. Ceci permet un abaissement de la température du produit formé à l'issue de la zone Z1, et la température en entrée de la zone Z2 est donc généralement supérieure à celle en entrée de zone Z1. Les mêmes familles de réactions se produisent dans la zone Z2 et la zone Z1, avec une cinétique un peu plus rapide dans la zone Z2 en raison d'une température moyenne supérieure.

Le même principe se déroule ensuite dans les zones catalytiques successives, le flux de charge prétraitée (Fn + $\varepsilon_n$RPP+$\delta_n$H$_2$PP) et éventuellement un flux de recycle Rn étant additionné au produit totalement converti formé dans les zones catalytiques antérieures.

Au fur et à mesure que la charge se transforme en hydrocarbures paraffiniques dans une zone catalytique, la température augmente dans la zone, les réactions d'hydrogénation et de désoxygénation étant des réactions fortement exothermiques. Ainsi, la température est suffisamment élevée vers la sortie d'une zone catalytique pour pourvoir effectuer la réaction d'hydrodéazotation. La température à la sortie d'au moins une zone catalytique est de préférence supérieure à 300°C, de préférence supérieure à 320°C.

Les ratios entre débits d'hydrogène ajoutés à chacun de ces flux (F1), ... (Fn) et débits massiques de charge (F1), ... (Fn), sont du même ordre de grandeur pour l'ensemble des zones catalytiques, le ratio entre le débit d'hydrogène et le débit de charge est compris entre 300 et 1500 Nm$^3$/m$^3$, de préférence entre 400 et 900 Nm$^3$/m$^3$. Optionnellement, il est possible d'injecter entre les zones catalytiques, un flux liquide complémentaire si le besoin de diluer davantage la charge se fait sentir.

Selon l'invention des vannes de régulation des flux partiels de charge et d'hydrogène peuvent être contrôlées par les valeurs de température au niveau des entrées et des sorties des zones catalytiques de manière à ajuster les flux partiels de charge et d'hydrogène ainsi que les éventuels flux de recycle liquide R1 à Rn pendant le fonctionnement. De cette manière la température désirée à l'entrée des zones catalytiques et dans les zones catalytiques est maintenue. De même, le contrôle de la température peut être réalisé en variant la température de la charge (F+$\varepsilon$ RPP+$\delta$H$_2$PP) après prétraitement et/ou de l'hydrogène injecté et/ou du recycle dans le système de réacteur.

Le réacteur d'hydrotraitement du procédé selon l'invention peut contenir un nombre n variable de zones catalytiques. n est de préférence compris entre 3 et 10, de préférence entre 3 et 6. On entend par zone catalytique un lit catalytique. Chaque zone catalytique peut comprendre une ou plusieurs couches de catalyseurs, identiques ou différents, éventuellement complétées par des couches inertes. Les zones catalytiques peuvent contenir des catalyseurs identiques ou différents.

Le type de catalyseurs utilisés dans la section hydrotraitement de ce procédé, est bien connu dans l'art antérieur.

S'agissant de catalyseurs actifs sous forme sulfures, et les charges brutes traitées ayant en général des teneurs en soufre limitées (moins de 100 ppm poids généralement, et le plus souvent moins de 50 ppm poids), il convient d'additionner à l'ensemble des flux de charge, un composé soufré tel que le Di-Méthyl-Di-Sulfure (DMDS), qui dans les conditions de température de la section hydrotraitement, se décomposera en H$_2$S et en méthane. Ce dispositif permet de conserver sous leur forme sulfure les catalyseurs d'hydrotraitement utilisés dans le présent procédé, et ainsi de maintenir une activité catalytique suffisante tout au long du cycle. Les teneurs en DMDS injectées préconisées sont comprises entre 10 et 50 ppm poids équivalent soufre par rapport à la charge. En pratique, une addition de DMDS correspondant à 50 ppm poids équivalent soufre par rapport à la charge, est suffisante pour conserver l'activité catalytique tout au long du cycle.

Les catalyseurs utilisés dans la section hydrotraitement du procédé selon l'invention, peut être une association des catalyseurs décrits dans ce qui suit.

Le catalyseur d'hydrotraitement est un catalyseur sulfuré de type NiMo et comprenant un support d'alumine. Le support préféré est l'alumine $\eta$, $\delta$ ou $\gamma$.

La teneur en oxyde de nickel est comprise entre 1 et 5 % en poids d'oxyde de nickel (NiO) et la teneur en trioxyde de molybdène est comprise entre 5 à 25 % en poids d'oxyde de molybdène (MoO$_3$), les pourcentages étant exprimés en % poids par rapport à la masse totale du catalyseur.

La teneur totale en oxydes de métaux des groupes VIB et VIII dans le catalyseur utilisé est avantageusement comprise entre 5 et 40 % en poids et de manière préférée comprise entre 6 et 30 % en poids par rapport à la masse totale du catalyseur.

Selon l'invention, le rapport pondéral exprimé en oxyde métallique entre Mo et Ni est compris entre 10 et 2.

Ledit catalyseur utilisé dans l'étape d'hydrotraitement du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses c'est à dire la voie hydrodéoxygénation, ceci afin de maximiser le rendement en hydrocarbures entrant dans le domaine de distillation des gazoles et/ou des kérosènes. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques.

Ledit catalyseur utilisé dans l'étape d'hydrotraitement du procédé selon l'invention contient un élément dopant choisi parmi le phosphore et le bore, pris seuls ou en mélange. Ledit élément dopant peut être introduit dans la matrice ou de préférence être déposé sur le support. On peut également déposer du silicium sur le support, seul ou avec le phosphore et/ou le bore et/ou le fluor.

La teneur en poids d'oxyde dudit élément dopant est inférieure à 10 % et elle est avantageusement d'au moins 0.001 % par rapport à la masse totale du catalyseur.

Selon une variante préférée, on utilisera les catalyseurs tels que décrits dans la demande de brevet FR 2 943 071 décrivant des catalyseurs ayant une forte sélectivité pour les réactions d'hydrodésoxygénation.

Selon une autre variante préférée, on utilisera les catalyseurs tels que décrit dans la demande de brevet EP 2 210 663 décrivant des catalyseurs supportés ou massiques comprenant une phase active constituée d'un élément sulfuré du groupe VIB, l'élément du groupe VIB étant le molybdène.

On ne sortirait pas du cadre de la présente invention en utilisant dans l'étape d'hydrotraitement du procédé selon l'invention, de manière simultanée ou de manière successive, un seul catalyseur ou plusieurs catalyseurs différents dans les zones catalytiques.

Dans le cadre de l'invention, il est ainsi possible de maintenir une conversion globale de la charge issue de source renouvelable, c'est à dire une conversion par hydrodésoxygénation et décarboxylation/décarbonylation confondue, avantageusement supérieure ou égale à 90 % et de préférence une conversion globale de la charge égale à 100 %, tout en maximisant le rendement en produit d'hydrodésoxygénation ou la conversion par hydrodésoxygénation qui reste, conformément à l'invention, supérieure ou égale à 50%.

Dans le cas ou les catalyseurs ayant une forte sélectivité pour l'HDO (tels que décrits ci-dessus) sont utilisés, la conversion par hydrodésoxygénation est supérieure ou égale à 90%, de préférence supérieure ou égale à 95% et de manière préférée, supérieure ou égale à 96%. Dans ce cas la conversion par décarboxylation/décarbonylation ou rendement en produit de décarboxylation/décarbonylation de la charge issue de sources renouvelables est avantageusement limitée à au plus 10%, et de préférence limitée à au plus 5% et de manière plus préférée à au plus 4%.

La réaction d'hydrodésoxygénation conduit à la formation d'eau par consommation d'hydrogène et à la formation d'hydrocarbures de nombre de carbone égal à celui des chaînes d'acides gras initial. L'effluent issu de l'hydrodésoxygénation comporte des composés hydrocarbures pairs, tels que les hydrocarbures C14 à C24 et sont largement majoritaires par rapport aux composés hydrocarbures impairs, tels que C15 à C23, obtenu par les réactions de décarbonylation/décarboxylation. La sélectivité pour la voie hydrodésoxygénation est mise en évidence par la mesure du rendement total en hydrocarbure ayant un nombre d'atome de carbone pair et du rendement total en hydrocarbure ayant un nombre d'atome de carbone impair dans la fraction liquide valorisable en carburant. Les rendements en hydrocarbures pairs et impairs permettant d'accéder à la sélectivité de réaction (HDO/décarbonylation/décarboxylation) sont obtenus par analyse chromatographique en phase gazeuse des effluents liquides de réaction valorisable en carburant. La technique de mesure par analyse chromatographique en phase gazeuse est une méthode connue de l'homme du métier.

Sauf indication contraire, le procédé d'hydrotraitement selon l'invention est opéré dans des conditions d'hydrotraitement généralement connues dans l'art antérieur telles que celles décrites dans le brevet EP 1 741 768. La pression totale est comprise entre 2 MPa et 15 MPa, et de préférence entre 5 MPa et 10 MPa.

Conformément à l'invention, l'hydrogène est utilisé en excès. Dans le procédé selon l'invention, le ratio entre le débit d'hydrogène et le débit de charge brute est avantageusementcompris entre 300 et 1500 Nm$^3$/m$^3$, de préférence entre 600 et 900 Nm$^3$/m$^3$.

Une opération satisfaisante du procédé selon l'invention conduit à utiliser une VVH globale (définie comme étant le ratio entre le débit volumique total de charge brute traitée et le volume total de catalyseur dans la section hydrotraitement) comprise entre 0.1 et 5.0 h$^{-1}$, de préférence entre 0.1 et 1.5 h$^{-1}$.

Les températures utilisées dans les différentes zones de la section hydrotraitement, doivent être soigneusement contrôlées, afin d'éviter le plus possible les réactions indésirables telles que :

- les réactions de polymérisation de la charge, conduisant au dépôt de coke et donc à la désactivation du catalyseur,
- les réactions de décarboxylation/décarbonylation, conduisant à une perte de rendement en distillats moyens,

et dans le même temps de réaliser la conversion totale de la charge, aussi bien en élimination des composés oxygénés que des composés azotés. Le procédé selon l'invention opère à une température comprise entre 200 et 400 °C. L'introduction de la charge en proportions croissantes couplé avec un recycle important sur la première zone catalytique permet d'obtenir un profil montant de températures en entrée des zones, mais aussi en sortie des zones.

La température à l'entrée de la zone Z1 doit de préférence être supérieure à 180°C, de manière préférée supérieure à 200°C. Les températures à l'entrée des zones catalytiques suivantes sont supérieures à celle en entrée de la zone précédente et inférieure à 280°C.

La température à la sortie d'au moins une zone catalytique est de préférence supérieure à 300°C, de préférence supérieure à 320°C. Les températures à la sortie de chacune des zones catalytiques est inférieure à 380°C, de façon à limiter la désactivation du catalyseur par cokage.

Le procédé selon l'invention utilise des réacteurs en lit fixe à écoulement ruisselant connus de l'homme du métier. Les réactifs (charge et hydrogène) sont introduits dans le réacteur suivant un écoulement descendant en co-courant du haut vers le bas du réacteur. De tels réacteurs sont par exemple décrits dans le document US 7 070 745.

Entre chaque zone catalytique, il est possible d'injecter de l'hydrogène supplémentaire, afin de profiter d'un effet de trempe (quench selon le terme anglo-saxon) et d'atteindre les températures souhaitées en entrée de la zone catalytique suivante. Ainsi, des boîtes de quench sont possiblement installées entre chaque zone catalytique, afin d'assurer une meilleure homogénéité des températures sur toute la section du réacteur, et pour l'ensemble des zones catalytiques.

De la même manière, des distributeurs peuvent avantageusement être installés entre chaque zone catalytique, afin de garantir une alimentation homogène en charge liquide, sur toute la section du réacteur, et pour l'ensemble des zones catalytiques.

Un avantage du procédé selon l'invention consiste dans sa grande flexibilité, selon l'origine de la charge. Des charges différant notablement entre elles, en particulier de par leurs différents degrés d'insaturation des chaines hydrocarbonées, peuvent être converties totalement aussi bien en ce qui concerne l'élimination de l'oxygène (ce qui amène une efficacité maximale de dilution de la charge brute dans la zone suivante) qu'en ce qui concerne l'élimination de l'azote (qui permet un bien meilleur fonctionnement de l'étape d'hydroisomérisation en aval).

Optionnellement, les charges issues de sources renouvelables utilisées dans le procédé selon l'invention peuvent être traitées en mélange avec des coupes pétrolières choisies parmi les gazoles, les kérosènes, et les essences issus des procédés de raffinage pétrolier. De préférence lesdites coupes pétrolières sont des charges pétrolières de type distillats moyens choisies dans le groupe formé par les gazoles et/ou les kérosènes de distillation atmosphérique directe et les gazoles et/ou les kérosènes issus de procédés de conversion, ou l'un quelconque de leur mélange.

De préférence, les coupes pétrolières sont choisies dans le groupe formé par les gazoles atmosphériques de distillation directe, les gazoles issus de procédés de conversion tels que par exemple ceux provenant du coking, d'une hydroconversion en lit fixe (tels que ceux issus des procédés HYVAHL® de traitement des lourds mis au point par la demanderesse) ou des procédés d'hydrotraitement des lourds en lit bouillonnant (tels que ceux issus des procédés H-OIL®), ou encore les huiles désasphaltées au solvant (par exemple au propane, au butane, ou au pentane) venant du désasphaltage de résidu sous vide de distillation directe, ou de résidus issus des procédés de conversion des charges lourdes tels que par exemple HYVAHL® et H-OIL®. Les charges peuvent aussi avantageusement être formées par mélange de ces diverses fractions. Elles peuvent également avantageusement contenir des coupes gazoles légers ou kérosènes avec un profil de distillation d'environ 100°C à environ 370°C. Elles peuvent aussi avantageusement contenir des extraits aromatiques et des paraffines obtenus dans le cadre de la fabrication d'huiles lubrifiantes.

Dans ce cas de figure, la quantité de recycle liquide envoyé à la première zone catalytique de la section hydrotraitement, peut être grandement réduit voire supprimé, puisque ces flux de charges pétrolières conduisent lors de leur traitement à l'hydrogène, à des dégagements de chaleur plus limités que lors du traitement de charges d'origine renouvelable comportant des quantités notables d'oxygène.


**Séparation**

Conformément à l'étape d) du procédé selon l'invention, l'effluent contenant des hydrocarbures paraffiniques issu de la dernière zone catalytique de l'étape c) est soumis à au moins une étape de séparation permettant de séparer au moins une fraction gazeuse et au moins une fraction liquide contenant les hydrocarbures paraffiniques. La fraction gazeuse contient l'hydrogène, le CO, le $CO_2$, l'$H_2S$ et les gaz légers. Ladite fraction gazeuse subit avantageusement une étape de purification de manière à récupérer un flux de gaz riche en hydrogène. Ladite purification est avantageusement mise en œuvre par tout moyen connu de l'homme du métier et de préférence au moyen d'une adsorption aux amines suivie éventuellement d'une méthanation ou éventuellement d'une adsorption modulée en pression ou PSA "Pressure Swing Adsorption" selon la terminologie anglo-saxonne. Ledit flux de gaz riche en hydrogène peut alors avantageusement être additionné d'hydrogène d'appoint issu de la raffinerie ou de tout procédés de production d'hydrogène connu de l'homme du métier. Ledit flux de gaz riche en hydrogène est alors divisé en au moins un flux de gaz riche en hydrogène qui est recyclé dans l'étape c) d'hydrotraitement et en au moins un flux de gaz riche en $H_2P$. Ledit flux de gaz riche en hydrogène $H_2P$ est ensuite recyclé et mélangé au flux F0 et RPP conformément à l'étape a) du procédé selon l'invention.

Ledit effluent contenant des hydrocarbures paraffiniques issu de la dernière zone catalytique de l'étape c) est soutiré dans la ligne (5).

Selon un premier mode de réalisation, l'étape d) de séparation peut être effectuée en une seule étape par un séparateur haute température haute pression (S) opérant sans réduction de pression à une température comprise entre 145°C et 280°C.

Selon un deuxième mode de réalisation non représenté sur la figure 1, l'étape d) de séparation comprend une séparation en deux étapes sans réduction de pression, la première séparation étant effectuée entre 145°C et 280°C dans un séparateur à haute température, la deuxième étant effectuée entre 25°C et 100°C dans un séparateur à basse température non représenté sur la figure. Dans un mode de réalisation préféré, le condensat de la fraction obtenue à partir de la deuxième étape de séparation est introduit dans un récipient de dégazage non représenté sur la figure.

De préférence, ladite fraction liquide contenant les hydrocarbures paraffiniques issu de l'étape d) de séparation gaz/liquide subit ensuite une séparation d'au moins une partie et de préférence la totalité restante de l'eau formée lors des réactions d'hydrodésoxygénation non représenté sur la figure.

Le but de cette étape est de séparer l'eau de la fraction liquide contenant les hydrocarbures paraffiniques. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes. De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation.

Conformément à l'étape e) du procédé selon l'invention, au moins une partie R de ladite fraction liquide contenant les hydrocarbures paraffiniques est divisée en au moins un flux RLC et en ledit flux RPP recyclé en amont de l'étape a) et mélangé au flux de charge totale F0 et ledit flux RLC est divisé en au moins un certain nombre de différents flux partiels R1 à Rn inférieur ou égal au nombre de zones catalytiques n dans le réacteur, lesdits flux R1 à Rn étant recyclés en amont des zones catalytiques 1 à n, de telle sorte que le rapport massique entre le flux d'hydrocarbures paraffiniques $(R1+\varepsilon 1RPP)$ envoyé dans la première zone catalytique et le flux partiel F1 de la charge introduite dans la première zone catalytique soit supérieur ou égal à 10.

La proportion du flux RPP introduite dans l'étape a) du procédé selon l'invention par rapport au flux de recycle total R est telle que le rapport de débit massique RPP/R est compris entre 0,1 et 0,9 et de préférence entre 0,15 et 0,8.

Au moins une autre partie de la fraction liquide contenant les hydrocarbures paraffiniques issue de l'étape d) de séparation n'est avantageusement pas recyclée.

De préférence, la partie de la fraction liquide contenant les hydrocarbures paraffiniques issue de l'étape d) de séparation qui n'est pas recyclée dans au moins une zone catalytique ou en mélange au flux de charge fraiche totale F0 en amont de l'étape de prétraitement, est envoyée soit directement au pool gazole, soit directement dans une section d'hydroisomérisation (HIS) optionnelle (6), afin de produire des bases kérosènes et/ou gazoles de bonnes qualité et en particulier des bases kérosène présentant de bonnes propriétés à froid. En effet, ladite partie de la fraction liquide contenant les hydrocarbures paraffiniques non recyclée issue de l'étape d) de séparation du procédé selon l'invention est suffisamment déazoté pour préserver l'activité catalytique de la section d'hydroisomérisation. Un réacteur d'hydrodéazotation entre l'hydrotraitement et l'hydroisomérisation n'est pas nécessaire.

*Hydroisomérisation*

Selon un mode de réalisation préféré, une partie au moins de la fraction liquide contenant les hydrocarbures paraffiniques issue de l'étape d) de séparation et non recyclée est hydroisomérisée en présence d'un catalyseur d'hydroisomérisation. L'étape optionnelle d'hydroisomérisation est avantageusement mise en oeuvre selon les conditions opératoires et en présence de catalyseurs d'hydroisomérisation connus de l'homme du métier. De préférence, les conditions opératoires et les catalyseurs utilisés dans ladite étape d'hydroisomérisation sont celles et ceux décrits dans le brevet FR 2 943 071.

L'effluent hydroisomérisé est ensuite avantageusement soumis au moins en partie, et de préférence en totalité, à une ou plusieurs séparations.

Ladite ou lesdites étape(s) de séparation peu(ven)t avantageusement comprendre une séparation flash permettant de séparer les gaz du liquide et/ou une distillation atmosphérique. De préférence, ladite ou lesdites étape(s) de séparation comprend(ent) une distillation atmosphérique. Le but de ladite étape est de séparer les gaz du liquide, et notamment, de récupérer les gaz riches en hydrogène pouvant contenir également des légers tels que la coupe $C_1-C_4$, une coupe essence (150 °C$^-$), et au moins une coupe distillats moyens (150°C$^+$) contenant du kérosène et/ou du gazole.

La valorisation de la coupe essence (ou naphta) n'est pas l'objet de la présente invention, mais cette coupe peut avantageusement être envoyée dans une unité de vapocraquage pour la production d'hydrogène ou de reformage catalytique. L'hydrogène ainsi produit peut être injecté dans l'étape d'hydrotraitement et/ou d'hydroisomérisation optionnelle.

La coupe distillats moyens qui représente les bases carburants recherchées peut comprendre une coupe contenant le gazole et le kérosène ou les deux coupes peuvent être récupérés séparément. Ces produits sont à base de sources renouvelables et ne contiennent pas de composés soufrés.

Une partie au moins de la ou des coupes distillats moyens peut avantageusement être recyclée dans l'étape d'hydrotraitement.

Selon une variante, au moins une partie de la fraction 150°C+ peut être recyclée dans l'étape d'hydroisomérisation. Ainsi, cette fraction est resoumise à l'isomérisation ce qui permet d'améliorer les propriétés à froid de ladite fraction.

Selon une autre variante, au moins une partie de la fraction 300°C+ peut être recyclée dans l'étape d'hydroisomérisation. Ainsi, cette fraction est resoumise à l'isomérisation ce qui permet de valoriser cette coupe en produits plus légers et d'améliorer les propriétés à froid.

Selon une autre variante, une partie au moins de la fraction 150°C+ peut être recyclée dans l'étape d'hydrotraitement.

Le gaz contenant l'hydrogène qui a été séparé lors de l'étape d) de séparation du procédé selon l'invention et/ou de l'étape optionnelle d'hydroisomérisation, est, si nécessaire, avantageusement au moins en partie traité pour réduire sa teneur en légers ($C_1$ à $C_4$). De même, il subit avantageusement un ou plusieurs traitements de purification intermédiaire, de préférence au moins un lavage avec au moins une amine, suivi de préférence d'une méthanation et/ou d'une séparation par adsorption modulée en pression (en anglais Pressure Swing Adsorption ou (PSA)), avant d'être recyclé.

On peut avantageusement introduire l'hydrogène de recycle, de préférence purifié, soit avec la charge entrant dans l'étape d'hydrodésoxygénation selon l'invention et/ou dans l'étape d'hydroisomérisation optionnelle, soit sous forme d'hydrogène de trempe entre les lits de catalyseurs d'hydrodésoxygénation selon l'invention et/ou d'hydroisomérisation. Il est également avantageux d'additionner au gaz de recyclage une certaine quantité de composé soufré (tel que par exemple le DMDS, di-méthyl disulfure), qui par décomposition thermique produit de l'hydrogène sulfuré $H_2S$. Ce dispositif permet de maintenir si nécessaire le catalyseur de l'étape d'hydrotraitement et/ou de l'hydro-isomérisation optionnelle (dans le cas d'un catalyseur actif sous forme sulfure) à l'état sulfuré.

## EXEMPLE 1 (NON CONFORME A L'INVENTION)

Dans l'exemple 1, aucune étape de prétraitement n'est réalisée.

La charge à traiter est une huile de jatropha partiellement raffinée, dont les principales caractéristiques se trouvent dans le tableau 1a.

Tableau 1a : Caractéristiques de la charge à traiter (huile de jatropha semi-raffinée)

| Charge traitée | Huile de jatropha |
|---|---|
| Densité à 15°C (kg/m$^3$) | 923.5 |
| Oxygène (% poids) | 11.0 |
| Hydrogène (% poids) | 11.4 |
| indice d'iode (g/100g) | 107 |
| Soufre (ppm poids) | 4 |
| Azote (ppm poids) | 29 |
| Indice d'iode (g I2/100 g) | 95 |
| Phosphore (ppm poids) | 52 |
| Magnésium (ppm pds) | 23 |
| Calcium (ppm pds) | 35 |
| Sodium (ppm pds) | 8 |

On souhaite traiter 100 g/h (F = Fo) de cette charge dans un réacteur d'hydrotraitement constitué de 4 lits catalytiques, sans étape préalable de prétraitement.

Chaque zone catalytique est constituée d'un lit de catalyseur. Le catalyseur utilisé est identique dans les trois zones catalytiques de l'étape d'hydrotraitement et comprend 4% poids de NiO, 21% poids de $MoO_3$ et 5% poids de $P_2O_5$ supporté sur une alumine gamma. Ledit catalyseur présente un rapport atomique Ni/Mo égal à 0,4.

Les catalyseurs supportés sont préparés par imprégnation à sec des précurseurs oxydes en solution puis sulfurés in-situ préalablement au test, à une température de 350°C, à l'aide d'une charge gazole de distillation directe additivée de 2% en poids de soufre ex-diméthyldisulfure (DMDS). Après sulfuration in-situ dans l'unité sous pression, la charge issue d'une source renouvelable constituée par l'huile de colza décrite dans le tableau 1a, est envoyée dans chacune des trois zones catalytiques.

Afin de maintenir le catalyseur à l'état sulfure, on ajoute 50 ppm poids de soufre sous forme de DMDS à la charge. Dans les conditions de réactions, le DMDS est totalement décomposé pour former du méthane et de l'$H_2S$.

La quantité de recycle liquide utilisé, et injecté avec la charge brute sur la zone Z1, est de 100 g/h (R), ce qui conduit à un taux de recycle total massique de 1.0. Ce recycle est intégralement envoyé dans la 1ère zone catalytique Z1 (R1 = R et R2 = R3 = 0).

La pression opératoire totale est de 5 MPa rel. On mélange à chacun des flux de charge, un flux de gaz riche en hydrogène contenant 90% volume d'hydrogène, 4% vol de méthane et 6 %volume de propane, avec un débit tel qu'en entrée de chacune des zones catalytiques, on a un ratio $H_2$/charge brute de 700 $Nm^3/m^3$.

Le tableau 1b indique les débits de chacun des trois flux de charge, ainsi que les rapports diluant/charge pour chacune des 3 zones catalytiques.

Tableau 1b : Conditions opératoires de la section hydrotraitementet caractéristiques de l'effluent produit

| | |
|---|---|
| Débit charge zone Z1 (F1) (g/h) | 9.1 |
| Débit charge zone Z2 (F2) (g/h) | 25.5 |
| Débit charge zone Z3 (F3) (g/h) | 31.0 |
| Débit charge zone Z4 (F4) (g/h) | 34.4 |
| Débit total charge (F0) (g/h) | 100.0 |
| Débit de recycle liquide (R) (g/h) | 100.0 |
| Taux de recycle total R/F (g/g) | 1.0 |
| Taux de recycle local zone Z1 = RF1 (g/g) | 11 |
| Taux de recycle local zone Z2 = RF2 (g/g) | 4.2 |
| Taux de recycle local zone Z3 = RF3 (g/g) | 4.1 |
| Taux de recycle local zone Z4 = RF4 (g/g) | 4.1 |
| Température entrée zone Z1 (°C) | 250 |
| Température sortie zone Z4 (°C) | 309 |
| **Caractéristiques effluent produit** | |
| Débit d'hydrocarbures produits (g/h) | 86.0 |
| Densité à 15°C (kg/m3) | 790 |
| Oxygène (% poids) | < 0.2 |
| Azote (ppm poids) | 5 |

L'expérience est réalisée ici en envoyant le recycle liquide en entrée de la première zone catalytique d'hydrotraitement Z1, sans étape de prétraitement avec une VVH de 1 $h^{-1}$ sur la charge huile. L'hydrocarbure produit contient, en sortie de la section hydrotraitement, une teneur significative en azote (5 ppm poids).

Le tableau 1c donne l'évolution au cours du temps de la perte de charge dans le réacteur d'hydrotraitement.

Tableau 1c

| | |
|---|---|
| Perte de charge à t = 0 (bar rel) | 0.2 |
| Perte de charge à t = 250 h (bar rel) | 0.5 |
| Perte de charge à t = 500 h (bar rel) | 2.5 |
| Perte de charge à t = 750 h (bar rel) | 8.0 |
| Perte de charge à t = 800 h (bar rel) | 10.2 |

La perte de charge est mesurée par différence de pression donnée par deux manomètres disposés en entrée et en sortie du réacteur.

La perte de charge mesurée dans le réacteur d'hydrotraitement augmente de façon permanente au cours de l'essai, jusqu'à dépasser la valeur de 10 bar rel au bout de 800 heures d'essai, ce qui contraint d'interrompre l'essai au bout de cette durée. Cette augmentation de la perte de charge est due à l'accumulation, dans le réacteur, de dépôts métalliques provenant de la décomposition des phospholipides. Sur unité industrielle, ce phénomène conduirait à une durée de cycle réduite sur le réacteur d'hydrotraitement.

L'hydrocarbure liquide produit précédemment est ensuite injecté dans un réacteur contenant 100 cm$^3$ d'un catalyseur d'hydroisomérisation, composé de NiW/SiO$_2$Al$_2$O$_3$.
On injecte l'hydrocarbure avec un débit volumique de 100 cm$^3$/g, soit une VVH dans la section d'hydroisomérisation de 1.0 h$^{-1}$.
L'étape d'hydroisomérisation est réalisée sur un lit fixe de catalyseur, en utilisant une pression de 5 MPa rel et une température de 330°C et un débit d'hydrogène pur tel que le rapport entre le débit volumique d'hydrogène et le débit volumique d'hydrocarbure liquide est de 700 N m$^3$/m$^3$. On obtient alors en sortie des gaz (C4$^-$), une coupe naphta (C5-150°C), et une coupe kérosène (150°C$^+$). Le tableau 1d fournit les caractéristiques de cette coupe kérosène, qui ne satisfait pas les spécifications de l'ASTM D7566 en terme de point final de distillation atmosphérique D86 (point final > 300°C), ni de point de disparition des cristaux ou "freezing point" (-5°C pour une valeur spécifiée à -40°C max).

Tableau 1d : Caractéristiques de la coupe kérosène produite

| | |
|---|---|
| Densité à 15°C (kg/m3) | 780.1 |
| Point initial D86 (°C) | 160 |
| Point final D86 (°C) | 305 |
| Azote (ppm poids) | < 0.3 |
| Point de disparition des cristaux (°C) | -5 |
| Point de flash (°C) | 50 |

## EXEMPLE 2 (CONFORME A L'INVENTION)

On traite la même charge huile de jatropha partiellement raffinée que dans l'exemple précédent, avec un débit de charge identique : Fo = F = 100 g/h. Le catalyseur ainsi que sa préparation est identique à celui de l'exemple 1.
La quantité de recycle liquide utilisé, R, est de 100 g/h. Ce recycle est divisé en un flux RLC contenant les hydrocarbures paraffiniques issus de l'étape d) de séparation, qui est envoyé intégralement vers la première zone catalytique Z1, et dont le débit est de 80 g/h, et en un flux RPP de 20 g/h, qui est mélangé avec le flux de charge huile de colza F0. Le rapport RPP/FO est donc de 0,2. Le flux de gaz riche en hydrogène, H$_2$P, contenant 90% en volume d'hydrogène (4%vol de méthane et 6%vol en volume de propane) est tel que le ratio H$_2$P/F0 est de 930 NL/L et est injecté avec le flux F0 de la charge huile et le flux RPP de paraffines.
L'huile de jatropha est mélangée au flux RPP et au flux H$_2$P dans un mélangeur, et le mélange est chauffé à une température de 165°C. Ce mélange est introduit dans la zone de prétraitement, dans laquelle ledit mélange s'écoule à travers 70 cm$^3$ d'un lit fixe de catalyseur sulfuré comprenant 4% poids de NiO, 21% poids de MoO$_3$ et 5% poids de P$_2$O$_5$ supporté sur une alumine gamma. Ledit catalyseur présente un rapport atomique Ni/Mo égal à 0,4 et est mis en forme de sphéres, le lit présentant un taux de vide de 0,46 de diamètre compris entre 3 et 6 mm. L'alumine présente un volume macroporeux, mesuré par intrusion au mercure, c'est à dire un volume des pores dont le diamètre moyen est supérieur à 500 A, égal à 0,35 ml/g, un volume poreux total égal à 1,2 ml/g et une surface spécifique exprimée en SBET égale à 140 m$^2$/g.
A l'issue de cette étape de prétraitement, on sépare parfaitement un flux F d'huile prétraitée et préhydrogénée, le flux RPP contenant les hydrocarbures paraffiniques et le flux gaz H$_2$RPP contenant l'hydrogène et les gaz non convertis. On a donc ε = α = δ = 0. Ces flux RPP et H$_2$PP sont mélangés au flux de recycle RLC envoyés vers la 1ère zone catalytique selon les configurations (i) et (j) du schéma de procédé.
A l'issue du prétraitement, les caracéristiques trouvées sur le flux d'huile F sont explicitées dans le tableau 2a.

Tableau 2a : Caractéristiques de la charge prétraitée (huile de jatropha) - Flux F

| Charge traitée | Huile de jatropha |
|---|---|
| Densité à 15°C (kg/m$^3$) | 923.5 |
| Oxygène (% poids) | 11.0 |
| Hydrogène (% poids) | 11.4 |
| indice d'iode (g/100g) | 58 |
| Soufre (ppm poids) | 3 |
| Azote (ppm poids) | 13 |
| Phosphore (ppm poids) | < 1 |
| Calcium (ppm poids) | < 1 |
| Magnésium (ppm pds) | <1 |

(suite)

| Charge traitée | Huile de jatropha |
|---|---|
| Sodium (ppm poids) | < 1 |

Le taux d'hydrogénation des insaturations des triglycérides de la charge, c'est à dire la saturation de ladite charge est suivie par la mesure de l'indice d'iode selon la norme NF ISO 3961. Le prétraitement permet donc l'hydrogénation au moins partielle des insaturations des triglycérides contenus dans l'huile de jatropha.

Le prétraitement permet d'éliminer à la fois le phosphore et les éléments principaux présents dans l'huile (calcium, magnésium et sodium). Cette étape permet également d'abaisser significativement la teneur en azote de l'huile de départ, du fait de l'élimination de certains composés azotés (13 ppm au lieu de 29 ppm initialement).

Les conditions opératoires de la section hydrotraitement sont identiques à celles utilisées dans l'exemple 1. Le taux de recycle total massique RT = (RLC + RPP) / F0 = R/F (configuration (i)), est identique à l'exemple 1 et égal à 1.0, La distribution de la charge sur les différentes zones catalytiques d'hydrotraitement, est identique à celle adoptée dans l'exemple 1. Le tableau 2b indique les débits de différents flux et en particulier de chacun des trois flux alimentant les zones catalytiques de l'hydrotraitement, ainsi que les rapports diluant/charge pour chacune des 3 zones catalytiques.

Tableau 2b : Conditions opératoires de la section hydrotraitement et caractéristiques de l'effluent produit

| | |
|---|---|
| Débit charge zone Z1 (F1) (g/h) | 9.1 |
| Débit charge zone Z2 (F2) (g/h) | 25.5 |
| Débit charge zone Z3 (F3) (g/h) | 31.0 |
| Débit charge zone Z4 (F3) (g/h) | 34.4 |
| Débit total charge (F0) (g/h) | 100.0 |
| Débit de recycle liquide (RLC) (g/h) | 80.0 |
| Débit de recycle liquide (RPP) (g/h) | 20.0 |
| Débit de recycle liquide total (R) (g/h) | 100.0 |
| Ratio RPP/Fo (g/g) | 0.2 |
| Ratio RPP/R (g/g) | 0.2 |
| Ratio H2P/F0 (NL/L) | 930 |
| Taux de recycle liquide total RT (=R/F) (g/g) | 1 |
| Taux de recycle local zone Z1 = RF1 (g/g) | 11 |
| Taux de recycle local zone Z2 = RF2 (g/g) | 4.2 |
| Taux de recycle local zone Z3 = RF3 (g/g) | 4.1 |
| Taux de recycle local zone Z4 = RF4 (g/g) | 4.1 |
| Température d'entrée Zone prétraitement (°C) | 165 |
| Température entrée zone Z1 (°C) | 250 |
| Température sortie zone Z4 (°C) | 309 |
| **Caractéristiques effluent produit** | |
| Débit d'hydrocarbures produits (g/h) | 86.0 |
| Densité à 15°C (kg/m3) | 790 |
| Oxygène (% poids) | < 0.2 |
| Azote (ppm poids) | < 0.3 |

Par rapport à l'exemple 1, la section prétraitement permet d'abaisser très sensiblement la teneur en azote du flux d'huile alimentant la section hydrotraitement, et permet d'obtenir en sortie un flux d'hydrocarbures exempt d'oxygène et d'azote (teneur en azote inférieure à la limite de détection, soit inférieure à 0.3 ppm poids).

Le tableau 2c illustre l'évolution au cours du temps de la perte de charge dans la section hydrotraitement.

Tableau 2c : Evolution au cours du temps de la perte de charge dans le réacteur d'hydrotraitement

| Perte de charge à t = 0 (bar rel) | 0.3 |
|---|---|

(suite)

| | |
|---|---|
| Perte de charge à t = 250 h (bar rel) | 0.4 |
| Perte de charge à t = 500 h (bar rel) | 0.4 |
| Perte de charge à t = 750 h (bar rel) | 0.4 |
| Perte de charge à t = 800 h (bar rel) | 0.4 |

La perte de charge est mesurée comme dans l'exemple 1.

Au cours des 800 heures de fonctionnement de l'essai d'hydrotraitement, aucune augmentation notable de la perte de charge dans le réacteur n'a été observée. Ceci provient du fait que le flux d'huile alimentant le réacteur est exempt de métaux, ce qui supprime le colmatage progressif du réacteur par accumulation de dépôts solides métalliques.

Cet hydrocarbure liquide est ensuite traité dans un réacteur d'hydroisomérisation et sous des conditions opératoires strictement identiques à celles décrites dans l'exemple 1. On obtient alors en sortie des gaz (C4⁻), une coupe naphta (C5-150°C), et une coupe kérosène (150°C⁺).

Le tableau 2d fournit les caractéristiques de la coupe kérosène produite dans ces conditions.

Tableau 2d : Caractéristiques de la coupe kérosène produite

| | |
|---|---|
| Densité à 15°C (kg/m3) | 764.5 |
| Point initial D86 (°C) | 160 |
| Point final 86 (°C) | 295 |
| Azote (ppm poids) | < 0.3 |
| Point de disparition des cristaux (°C) | -50 |
| Point de flash (°C) | 50 |

On observe que le point de disparition des cristaux de la coupe kérosène produite selon la présente invention répond aux spécifications ASTM D7566 requérant un point de disparition des cristaux de - 40°C max.

**Revendications**

1. Procédé d'hydrotraitement d'une charge issue de sources renouvelables choisie parmi les huiles et graisses d'origine végétale ou animale, ou des mélanges de telles charges, contenant des triglycérides et/ou des acides gras libres et/ou des esters, pour produire des hydrocarbures paraffiniques dans lequel l'étape c) d'hydrotraitement opère en présence d'hydrogène en excès de la consommation d'hydrogène théorique et à des conditions d'hydrotraitement à une température comprise entre 200 et 400 °C, à une pression totale comprise entre 2 MPa et 15 MPa, à ratio entre le débit d'hydrogène et le débit de charge brute compris entre 300 et 1500 $Nm^3/m^3$ et à une VVH globale comprise entre 0.1 et 5.0 $h^{-1}$, dans un réacteur à lit fixe ayant plusieurs zones catalytiques disposées en série et comprenant un catalyseur d'hydrotraitement sulfuré de type NiMo et comprenant un support d'alumine, la teneur en oxyde de nickel étant comprise entre 1 et 5 % en poids d'oxyde de nickel (NiO) et la teneur en trioxyde de molybdène étant comprise entre 5 à 25 % en poids d'oxyde de molybdène ($MoO_3$), les pourcentages étant exprimés en % poids par rapport à la masse totale du catalyseur, et le rapport pondéral exprimé en oxyde métallique entre Mo sur Ni étant compris entre 10 et 2, ledit catalyseur utilisé dans l'étape d'hydrotraitement contenant un élément dopant choisi parmi le phosphore et le bore, pris seuls ou en mélange, la teneur en poids d'oxyde dudit élément dopant étant inférieure à 10 % et d'au moins 0.001 % par rapport à la masse totale du catalyseur, **caractérisé en ce que** ledit procédé comporte au moins :

   a) une étape a) dans laquelle le flux de la charge totale F0 est mélangé avec un flux RPP constitué par au moins une partie de la fraction liquide R contenant des hydrocarbures paraffiniques issus de l'étape d) de séparation et avec un flux de gaz riche en hydrogène $H_2P$, ledit mélange étant amené à une température comprise entre 160 et 210°C, le rapport de débit massique RPP/FO est compris entre 0,1 et 5, et la proportion du flux $H_2P$ introduite par rapport au flux de charge fraiche totale F0 étant telle que le rapport du débit volumique normal du flux riche en hydrogène sur le débit volumique de charge fraiche $H_2P/F0$ est compris entre 300 et 1000 NL/L,
   b) une étape b) de prétraitement dans laquelle ledit mélange est introduit à une tempréture comprise entre 160 et 210°C dans une zone de prétraitement dans laquelle l'écoulement dudit mélange se fait au travers d'un milieu poreux constitué d'un lit de particules appelé lit fixe, ledit lit de particules étant constitué de matériaux solides catalytiques en mélange ou pas avec des matériaux solides non catalytiques et ledit lit fixe présentant un taux de vide compris entre 0,25 et 0,8, lesdits matériaux solides catalytiques étant des catalyseurs sulfurés de type NiMo et comprenant un support alumine, la teneur en oxyde de nickel étant comprise entre 1 et 5 % en poids d'oxyde de nickel (NiO) et la teneur en trioxyde de molybdène étant comprise entre 5 à 25 % en poids d'oxyde de molybdène (MoO$_3$), les pourcentages étant exprimés en % poids par rapport à la masse totale du catalyseur, et le rapport pondéral exprimé en oxyde métallique entre Mo sur Ni étant compris entre 10 et 2, I ledit catalyseur utilisé dans l'étape d'hydrotraitement contenant un élément dopant choisi parmi le phosphore et le bore, pris seuls ou en mélange, la teneur en poids d'oxyde dudit élément dopant étant inférieure à 10 % et d'au moins 0.001 % par rapport à la masse totale du catalyseur, l'effluent issu de la zone de prétraitement étant introduit dans une zone de séparation, de manière à séparer au moins un effluent à hydrotraiter, contenant des trigly-céridérides (F + $\varepsilon$RPP + $\delta$H$_2$PP), au moins un effluent liquide riche en paraffines ((1-$\varepsilon$) RPP + $\alpha$H$_2$PP) et au moins un effluent gazeux riche en hydrogène ((1- $\delta$-$\alpha$) H$_2$PP) avec ($\alpha$+$\delta$) compris entre 0 et 1 et $\varepsilon$ et $\delta$ compris entre 0,01 et 0,5,

c) une étape c) d'hydrotraitement dans laquelle au moins un effluent à hydrotraiter issu de l'étape b) de pré-traitement (F + $\varepsilon$RPP +$\delta$H$_2$PP) ayant subi une étape de séparation d'un effluent riche en paraffines, est divisé en au moins un certain nombre de différents flux partiels (F1+ $\varepsilon_1$RPP+$\delta_1$H$_2$PP) à (Fn + $\varepsilon_n$RPP+$\delta_n$H$_2$PP) égal au nombre de zones catalytiques n dans le réacteur, le premier flux partiel (F1+ $\varepsilon_1$RPP+$\delta_1$H$_2$PP) est injecté dans la première zone catalytique, le deuxième flux partiel (F2+ $\varepsilon_2$RPP+$\delta_2$H$_2$PP) est injecté dans la deuxième zone catalytique et ainsi de suite, si n est supérieur à 2,

les différents flux partiels sont injectés dans les zones catalytiques successives dans des proportions croissantes de telle manière que F1/F soit inférieur à F2/F, lui-même inférieur ou égale a F3/F et ainsi de suite jusqu'à F(n-1)/F soit inférieur à Fn/F, pour produire un effluent contenant des hydrocarbures paraffiniques, la température à l'entrée de la zone Z1 étant supérieure à 200°C, les températures à l'entrée des zones catalytiques suivantes étant supérieures à celle en entrée de la zone précédente et inférieures à 280°C, et les températures à la sortie de chacune des zones catalytiques étant inférieures à 380°C,

d) une étape d) de séparation dans laquelle ledit effluent contenant des hydrocarbures paraffiniques est soumis à au moins une étape de séparation permettant de séparer au moins une fraction gazeuse et au moins une fraction liquide contenant les hydrocarbures paraffiniques,

e) une étape e) dans laquelle au moins une partie R de ladite fraction liquide contenant les hydrocarbures paraffiniques issue de l'étape d) est divisée en au moins un flux RLC et en ledit flux RPP recyclé en amont de l'étape a) et mélangé au flux de charge totale F0, la proportion du flux RPP introduite dans ladite étape a) par rapport au flux de recylce total R étant telle que le rapport de débit massique RPP/R est compris entre 0,1 et 0,9, et ledit flux RLC est divisé en au moins un certain nombre de différents flux partiels R1 à Rn inférieur ou égal au nombre de zones catalytiques n dans le réacteur, lesdits flux R1 à Rn étant recyclés en amont des zones catalytiques 1 à n, de telle sorte que le rapport massique entre le flux d'hydrocarbures paraffiniques (R1+$\varepsilon_1$RPP) envoyé dans la première zone catalytique et le flux partiel F1 de la charge introduite dans la première zone catalytique soit supérieur ou égal à 10,

dans lequel la charge issue de sources renouvelables est brute ou a subi au moins une étape de raffinage de l'huile, et dans lequel des vannes de régulation des flux partiels de charge et d'hydrogène (F1+ $\varepsilon_1$RPP+$\delta_1$H$_2$PP) à (Fn + $\varepsilon_n$RPP+$\delta_n$H$_2$PP) et des flux de recycle liquide R1 à Rn sont contrôlées par les valeurs de température au niveau des entrées et des sorties des zones catalytiques de manière à ajuster les flux partiels de charge et d'hydrogène (F1+$\varepsilon_1$RPP+$\delta_1$H$_2$PP) à (Fn + $\varepsilon_n$RPP+$\delta_n$H$_2$PP) ainsi que les flux de recycle liquide R1 à Rn pendant le fonctionnement.

2. Procédé selon la revendication 1 dans lequel rapport de débit massique RPP/FO est compris entre 0,5 et 3.

3. Procédé selon la revendication 1 ou 2 dans lequel ledit flux de gaz riche en hydrogène H2P est constitué par au moins une partie de la fraction gazeuse issue de l'étape d) de séparation ayant subi une étape de purification, éventuellement en mélange avec de l'hydrogène frais.

4. Procédé selon l'une des revendications 1 à 3 dans lequel le taux recycle total (RT) est inférieur à 1.0, ledit taux de recycle total (RT) étant le rapport massique entre le flux total de paraffines du recycle envoyé dans les zones catalytiques Z1 à Zn (RLC+RPP) et le flux total de la charge renouvelable envoyé dans les zones catalytiques Z1 à Zn après passage dans la zone de prétraitement (F) :

$$RT = (RLC+RPP)/F = R/F.$$

**5.** Procédé selon l'une des revendications 1 à 4 dans lequel une partie au moins de la fraction liquide contenant les hydrocarbures paraffiniques issue de l'étape d) de séparation et non recyclée est hydroisomérisée en présence d'un catalyseur d'hydroisomérisation.


## Patentansprüche

**1.** Verfahren zur Hydrobehandlung einer Charge, die aus erneuerbaren Quellen stammt, welche aus den Ölen und Fetten pflanzlicher oder tierischer Herkunft ausgewählt sind, oder von Mischungen derartiger Chargen, die Triglyceride und/oder freie Fettsäuren und/oder Ester enthalten, um paraffinartige Kohlenwasserstoffe herzustellen, wobei der Schritt c) der Hydrobehandlung in Gegenwart von Wasserstoff, der gegenüber dem theoretischen Verbrauch im Überschuss vorliegt, und unter Hydrobehandlungsbedingungen bei einer Temperatur im Bereich von 200 bis 400 °C, bei einem Gesamtdruck im Bereich von 2 MPa bis 15 MPa, bei einem Verhältnis zwischen der Wasserstoff-Flussrate und der Flussrate der unbehandelten Charge im Bereich von 300 bis 1.500 Nm$^3$/m$^3$ und bei einer stundenbezogenen Gesamt-Raumgeschwindigkeit im Bereich von 0,1 bis 5,0 h$^{-1}$ in einem Festbettreaktor durchgeführt wird, der mehrere katalytische Bereiche aufweist, welche nacheinander angeordnet sind, wobei sie einen schwefelhaltigen Hydrobehandlungskatalysator vom Typ NiMo umfassen und einen Aluminiumoxidträger umfassen, wobei der Nickeloxidgehalt im Bereich von 1 bis 5 Gewicht-% an Nickeloxid (NiO) liegt und der Gehalt an Molybdäntrioxid im Bereich von 5 bis 25 Gewichts-% an Molybdänoxid (MoO$_3$) liegt, wobei die Prozentangaben in Gewichts-% unter Bezugnahme auf die Gesamtmasse des Katalysators ausgedrückt sind und wobei das Gewichtsverhältnis, welches als Metalloxid ausgedrückt ist, zwischen Mo und Ni im Bereich von 10 bis 2 liegt, wobei der Katalysator, welcher im Schritt der Hydrobehandlung verwendet wird, ein Dotierungselement enthält, das aus Phosphor und Bor ausgewählt ist, die jeweils einzeln oder in Mischung zum Einsatz kommen können, wobei der gewichtsmäßige Gehalt an Oxid des Dotierungselements weniger als 10 % und mindestens 0,001 % unter Bezugnahme auf die Gesamtmasse des Katalysators beträgt, **dadurch gekennzeichnet, dass** das Verfahren mindestens Folgendes aufweist:

a) einen Schritt a), in welchem der Stoffstrom der Gesamtcharge F0 mit einem Stoffstrom RPP, der aus mindestens einer Teilmenge der flüssigen Fraktion R besteht, welche paraffinartige Kohlenwasserstoffe enthält, die aus dem Trennungsschritt d) stammen, und mit einem wasserstoffreichen Gasstrom H$_2$P vermischt wird, wobei diese Mischung auf eine Temperatur im Bereich von 160 bis 210 °C gebracht wird, wobei das Massendurchsatzverhältnis RPP/FO im Bereich von 0,1 bis 5 liegt und der eingeleitete Anteil des Stoffstroms H$_2$P, unter Bezugnahme auf den Stoffstrom der frischen Gesamtcharge F0, derart ist, dass das Verhältnis der normalen volumenbezogenen Flussrate des wasserstoffreichen Stoffstroms zur volumenbezogenen Flussrate der frischen Charge H$_2$P/F0 im Bereich vom 300 bis 1.000 NL/L liegt,

b) einen Vorbehandlungsschritt b), in welchem die Mischung bei einer Temperatur im Bereich von 160 bis 210 °C in einen Vorbehandlungsbereich eingeleitet wird, wobei das Einströmen der Mischung durch ein poröses Medium erfolgt, das aus einem Partikelbett besteht, welches als Festbett bezeichnet wird, wobei das Partikelbett aus katalytischen feststofflichen Materialien besteht, die in Mischung mit nichtkatalytischen feststofflichen Materialien vorliegen oder nicht, und wobei das Festbett einen Hohlraumanteil im Bereich von 0,25 bis 0,8 aufweist, wobei es sich bei den katalytischen, feststofflichen Materialien um schwefelhaltige Katalysatoren vom Typ NiMo handelt und sie weiterhin einen Aluminiumoxidträger umfassen, wobei der Nickeloxidgehalt im Bereich von 1 bis 5 Gewicht-% an Nickeloxid (NiO) liegt und der Gehalt an Molybdäntrioxid im Bereich von 5 bis 25 Gewichts-% an Molybdänoxid (MoO$_3$) liegt, wobei die Prozentangaben in Gewichts-% unter Bezugnahme auf die Gesamtmasse des Katalysators ausgedrückt sind und wobei das Gewichtsverhältnis, welches als Metalloxid ausgedrückt ist, zwischen Mo und Ni im Bereich von 10 bis 2 liegt, wobei der Katalysator, welcher im Schritt der Hydrobehandlung verwendet wird, ein Dotierungselements enthält, das aus Phosphor und Bor ausgewählt ist, die jeweils einzeln oder in Mischung zum Einsatz kommen können, wobei der gewichtsmäßige Gehalt an Oxid des Dotierungselement weniger als 10 % und mindestens 0,001 % unter Bezugnahme auf die Gesamtmasse des Katalysators beträgt, wobei der ausgangsseitige Stoffstrom, welcher aus dem Vorbehandlungsbereich stammt, in einen Trennungsbereich eingeleitet wird, sodass eine Auftrennung in mindestens einen ausgangsseitigen Stoffstrom, der eine Hydrobehandlung erfahren soll und Triglyceride enthält (F + $\varepsilon$RPP + $\delta$H$_2$PP), mindestens einen flüssigen ausgangsseitigen Stoffstrom, der reich an Paraffinen ist ((1-$\varepsilon$) RPP + $\alpha$H$_2$PP) und mindestens einen gasförmigen ausgangsseitigen Stoffstrom erfolgt, der reich an Wasserstoff ist ((1- $\delta$-$\alpha$) H$_2$PP), wobei ($\alpha$+$\delta$) im Bereich von 0 bis 1 liegt und wobei $\varepsilon$ und $\delta$ im Bereich von 0,01 bis 0,5 liegen,

c) einen Hydrobehandlungsschritt c), in welchem mindestens ein ausgangseitiger Stoffstrom, der aus dem Vorbehandlungsschritt b) stammt (F + $\varepsilon$RPP + $\delta$H$_2$PP), nachdem er einen Schritt des Abtrennens eines ausgangsseitigen Stoffstroms, welcher reich an Paraffinen ist, erfahren hat, in eine bestimmte Mindestanzahl an verschiedenen Teilstoffströmen (F1 + $\varepsilon_1$RPP + $\delta_1$H$_2$PP) bis (Fn + $\varepsilon_n$RPP + $\delta_n$H$_2$PP) unterteilt wird, die gleich der Anzahl an katalytischen Bereichen n im Reaktor ist, wobei der erste Teilstoffstrom ($F1 + \varepsilon_1 RPP + \delta_1 H_2 PP$) in den ersten katalytischen Bereich eingeleitet wird, der zweite Teilstoffstrom ($F2 + \varepsilon_2 RPP + \delta_2 H_2 PP$) in den zweiten katalytischen Bereich eingeleitet wird, und so weiter, wenn n größer als 2 ist,

die Einleitung der verschiedenen Teilstoffströme in die aufeinanderfolgenden katalytischen Bereiche in Anteilen erfolgt, die derart zunehmen, dass F1/F geringer als F2/F ist, welches wiederum geringer als F3/F ist, und so weiter, bis hin zu F(n-1)/F, welches geringer als Fn/F ist, um einen ausgangsseitigen Stoffstrom zu produzieren, der paraffinartige Kohlenwasserstoffe enthält,

die Temperatur an der Eintrittsöffnung des Bereichs Z1 mehr als 200 °C beträgt, die Temperaturen an der Eintrittsöffnung der nachfolgenden katalytischen Bereiche höher als diejenige an der Eintrittsöffnung des vorhergehenden Bereichs und niedriger als 280 °C sind und die Temperaturen an der Austrittsöffnung jedes der katalytischen Bereiche niedriger als 380 °C sind,

d) einen Trennungsschritt d), in welchem der ausgangsseitige Stoffstrom, der paraffinartige Kohlenwasserstoffe enthält, mindestens einem Trennungsschritt unterzogen wird, der es ermöglicht, mindestens eine gasförmige Fraktion und mindestens eine flüssige Fraktion zu trennen, welche die paraffinartigen Kohlenwasserstoffe enthält,

e) einen Schritt e), in welchem mindestens eine Teilmenge R der flüssigen Fraktion, welche die paraffinartigen Kohlenwasserstoffe enthält, wobei sie aus dem Schritt d) stammt, in mindestens einen Stoffstrom RLC sowie in den Stoffstrom RPP unterteilt wird, welcher stromaufwärts des Schrittes a) zurückgeführt und mit dem Stoffstrom der Gesamtcharge F0 vermischt wird, wobei der Anteil des Stoffstroms RPP, welcher dem Schritt a) zugeführt wird, unter Bezugnahme auf den Stoffstrom an Gesamt-Rückführungsprodukt R derart ist, dass das Massendurchsatzverhältnis RPP/R im Bereich von 0,1 bis 0,9 liegt, und der Stoffstrom RLC in eine bestimmte Mindestanzahl an verschiedenen Teilstoffströmen R1 bis Rn unterteilt wird, die kleiner oder gleich der Anzahl an katalytischen Bereichen n im Reaktor ist, wobei die Stoffströme R1 bis Rn derart stromaufwärts der katalytischen Bereiche 1 bis n zurückgeführt werden, dass das Massenverhältnis zwischen dem Stoffstrom an paraffinartigen Kohlenwasserstoffen ($R_1 + \varepsilon_1 RPP$), der dem ersten katalytischen Bereich zugeführt wird, und dem Teilstoffstrom F1 der Charge, welche in den ersten katalytischen Bereich eingeleitet wird, größer oder gleich 10 ist,

wobei die Charge, welche aus erneuerbaren Quellen stammt, unbehandelt ist oder mindestens einen Schritte des Raffinierens des Öls erfahren hat und wobei die Ventile zur Regulierung der Teilstoffströme an Charge und an Wasserstoff ($F1 + \varepsilon_1 RPP + \delta_1 H_2 PP$) bis ($Fn + \varepsilon_n RPP + \delta_n H_2 PP$) und der Stoffströme an flüssigem Rückführungsprodukt R1 bis Rn anhand der Temperaturwerten im Bereich der Eintrittsöffnungen und Austrittsöffnungen der katalytischen Bereiche derart gesteuert werden, dass die Teilstoffströme an Charge und an Wasserstoff ($F1 + \varepsilon_1 RPP + \delta_1 H_2 PP$) bis ($Fn + \varepsilon_n RPP + \delta_n H_2 PP$) sowie die Stoffströme an flüssigem Rückführungsprodukt R1 bis Rn während des Betriebs eingestellt werden.

2. Verfahren nach Anspruch 1, wobei das Massendurchsatzverhältnis RPP/FO im Bereich von 0,5 bis 3 liegt.

3. Verfahren nach Anspruch 1 oder 2, wobei der wasserstoffreiche Gasstrom H2P aus mindestens einer Teilmenge der gasförmigen Fraktion besteht, welche aus dem Trennungsschritt d) stammt, wobei sie einen Aufreinigungsschritt erfahren hat, möglicherweise in Mischung mit frischem Wasserstoff.

4. Verfahren nach einem der Ansprüche 1 bis 3, wobei der Gesamtanteil an Rückführungsprodukt (RT) geringer als 1,0 ist, wobei der Gesamtanteil an Rückführungsprodukt (RT) dem Massenverhältnis zwischen dem Gesamtstoffstrom an Paraffinen des Rückführungsprodukts, der den katalytischen Bereichen Z1 bis Zn zugeführt wird (RLC+RPP) und dem Gesamtstoffstrom der erneuerbaren Charge entspricht, der den katalytischen Bereichen Z1 bis Zn zugeführt wird, nachdem er den Vorbehandlungsbereich durchlaufen hat (F) : RT = (RLC+RPP)/F = R/F.

5. Verfahren nach einem der Ansprüche 1 bis 4, wobei mindestens eine Teilmenge der flüssigen Fraktion, welche die paraffinartigen Kohlenwasserstoffe enthält, wobei sie aus dem Trennungsschritt d) stammt und nicht zurückgeführt wird, in Gegenwart eines Hydroisomerisierungskatalysators hydroisomerisiert wird.

## Claims

1. Process for hydrotreating a feedstock originating from renewable sources selected from oils and fats of vegetable or animal origin, or mixtures of such feeds, containing triglycerides and/or free fatty acids and/or esters, to produce paraffinic hydrocarbons, in which the hydrotreating step c) operates in the presence of hydrogen in excess of the theoretical hydrogen consumption and under hydrotreating conditions at a temperature of between 200 and 400°C, at a total pressure of between 2 MPa and 15 MPa, with a ratio of the hydrogen flow rate to the crude feedstock flow rate of between 300 and 1500 $Nm^3/m^3$ and with an overall HSV of between 0.1 and 5.0 $h^{-1}$, in a fixed bed reactor having a plurality of catalytic zones disposed in series and comprising a sulfurized NiMo hydrotreating catalyst comprising an alumina support, the nickel oxide content being between 1% and 5% by weight of nickel oxide (NiO) and the molybdenum trioxide content being between 5% to 25% by weight of molybdenum oxide ($MoO_3$), the percentages being expressed in weight% relative to the total mass of the catalyst, and the weight ratio of Mo to Ni, expressed in terms of metal oxide, being between 10 and 2, said catalyst used in the hydrotreating step containing a doping element selected from phosphorus and boron, alone or in a mixture, the oxide weight content of said doping element being less than 10% and at least 0.001% relative to the total mass of the catalyst, **characterized in that** said process comprises at least:

a) a step a) in which the total feedstock stream F0 is mixed with a stream RPP consisting of at least a portion of the liquid fraction R containing paraffinic hydrocarbons from the separation step d) and with a hydrogen-rich gas stream $H_2P$, said mixture being brought to a temperature of between 160 and 210°C, the mass flow rate ratio RPP/FO is between 0.1 and 5, and the proportion of the stream $H_2P$ introduced relative to the total fresh feedstock stream F0 being such that the ratio of the normal volume flow rate of the hydrogen-rich stream to the volume flow rate of fresh feedstock, $H_2P/F0$, is between 300 and 1000 NL/L;

b) a pretreatment step b) in which said mixture is introduced at a temperature of between 160 and 210°C into a pretreatment zone in which the flow of said mixture takes place through a porous medium consisting of a particle bed referred to as a fixed bed, said particle bed consisting of solid catalytic materials in a mixture or not with solid non-catalytic materials and said fixed bed having a void fraction of between 0.25 and 0.8, said solid catalytic materials being sulfurized NiMo catalysts comprising an alumina support, the nickel oxide content being between 1% and 5% by weight of nickel oxide (NiO) and the molybdenum trioxide content being between 5% to 25% by weight of molybdenum oxide ($MoO_3$), the percentages being expressed in weight% relative to the total mass of the catalyst, and the weight ratio of Mo to Ni, expressed in terms of metal oxide, being between 10 and 2, said catalyst used in the hydrotreating step containing a doping element selected from phosphorus and boron, alone or in a mixture, the oxide weight content of said doping element being less than 10% and at least 0.001% relative to the total mass of the catalyst, the effluent from the pretreatment zone being introduced into a separation zone, so as to separate at least one effluent to be hydrotreated, containing triglycerides (F + $\varepsilon$RPP + $\delta H_2$PP), at least one paraffin-rich liquid effluent ((1-$\varepsilon$) RPP + $\alpha H_2$PP) and at least one hydrogen-rich gaseous effluent ((1- $\delta$-$\alpha$) $H_2$PP) with ($\alpha$ + $\delta$) between 0 and 1 and with $\varepsilon$ and $\delta$ between 0.01 and 0.5;

c) a hydrotreating step c) in which at least one effluent to be hydrotreated resulting from the pretreatment step b) (F + $\varepsilon$RPP +$\delta H_2$PP), having undergone a step of separation from a paraffin-rich effluent, is divided into at least a certain number of different substreams (F1+ $\varepsilon_1$RPP+$\delta_1 H_2$PP) to (Fn + $\varepsilon_n$RPP+$\delta_n H_2$PP) equal to the number of catalytic zones n in the reactor, the first substream (F1+ $\varepsilon_1$RPP+$\delta_1 H_2$PP) is injected into the first catalytic zone, the second substream (F2+ $\varepsilon_2$RPP+$\delta_2 H_2$PP) is injected into the second catalytic zone, and so on, if n greater than 2,

the various substreams are injected into successive catalytic zones in increasing proportions such that F1/F is less than F2/F, which itself is less than or equal to F3/F and so on until F(n-1)/F is less than Fn/F, to produce an effluent containing paraffinic hydrocarbons,

the temperature at the entry to zone Z1 being greater than 200°C, the temperatures at the entry to the following catalytic zones being greater than the temperature at the entry to the preceding zone and less than 280°C, and the temperatures at the exit from each of the catalytic zones being less than 380°C;

d) a separation step d) in which said effluent containing paraffinic hydrocarbons is subjected to at least one separation step allowing separation of at least one gaseous fraction and at least one liquid fraction containing the paraffinic hydrocarbons;

e) a step e) in which at least a portion R of said liquid fraction containing the paraffinic hydrocarbons from step d) is divided into at least one stream RLC and into said stream RPP recycled upstream of step a) and mixed with the total feedstock stream F0, the proportion of the stream RPP that is introduced into said step a) relative to the total recycle stream R being such that the mass flow rate ratio RPP/R is between 0.1 and 0.9, and said stream RLC is divided into at least a certain number of different substreams R1 to Rn less than or equal to the number of catalytic zones n in the reactor, said streams R1 to Rn being recycled upstream of the catalytic zones 1 to n, such that the mass ratio of the stream of paraffinic hydrocarbons (R1+$\varepsilon_1$RPP) sent to the first catalytic zone to the substream F1 of the feed introduced into the first catalytic zone is greater than or equal to 10,

in which the feedstock originating from renewable sources is crude or has undergone at least one oil refining step, and in which valves regulating the feedstock and hydrogen substreams (F1+ $\varepsilon_1$RPP+$\delta_1 H_2$PP) to (Fn + $\varepsilon_n$RPP+$\delta_n H_2$PP)

and the liquid recycle streams R1 to Rn are controlled by the temperature values at the entries and exits of the catalytic zones so as to adjust the feedstock and hydrogen substreams (F1+ $\varepsilon_1$RPP+$\delta_1$H$_2$PP) to (Fn + $\varepsilon_n$-RPP+$\delta_n$H$_2$PP) and the liquid recycle streams R1 to Rn during operation.

2. Process according to Claim 1 in which the mass flow rate ratio RPP/FO is between 0.5 and 3.

3. Process according to Claim 1 or 2 in which said hydrogen-rich gas stream H2P consists of at least a portion of the gaseous fraction from the separation step d) having undergone a purification step, possibly in a mixture with fresh hydrogen.

4. Process according to one of Claims 1 to 3 in which the total recycle rate (RT) is less than 1.0, said total recycle rate (RT) being the mass ratio of the total paraffins stream of the recycle sent to catalytic zones Z1 to Zn (RLC+RPP) to the total renewable feedstock stream sent to the catalytic zones Z1 to Zn after passage through the pretreatment zone (F) : RT = (RLC+RPP)/F = R/F.

5. Process according to one of Claims 1 to 4 in which at least a portion of the liquid fraction containing the paraffinic hydrocarbons from the separation step d) and not recycled is hydroisomerized in the presence of a hydroisomerization catalyst.

**Figure 1**

**EP 2 592 062 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100133144 A
- US 7232935 B
- US 20090318737 A
- EP 2226375 A
- US 20090266743 A
- FR 2943071
- EP 2210663 A
- EP 1741768 A
- US 7070745 B